# EUROPEAN PATENT SPECIFICATION

(11) **EP 1 884 519 B1**
(45) Date of publication and mention of the grant of the patent: **19.03.2014**
(21) Application number: 06746827.2
(22) Date of filing: 24.05.2006
(51) Int. Cl.: C07F 9/50, C08G 61/08, C07F 15/00

(54) **METAL HYDRIDE COMPLEX, METHOD OF HYDROGENATING RING-OPENING POLYMERIZATION POLYMER OF CYCLOOLEFIN, AND PROCESS FOR PRODUCING PRODUCT OF HYDROGENATION OF RING-OPENING POLYMERIZATION POLYMER OF CYCLOOLEFIN**
METALL-HYDRID-KOMPLEX, VERFAHREN ZUR HYDRIERUNG EINES RINGÖFFNENDEN POLYMERISATIONS POLYMERS VON CYCLOOLEFIN, UND VERFAHREN ZUR HERSTELLUNG EINES PRODUKTS EINER HYDRIERUNG EINES RINGÖFFNENDEN POLYMERISATIONSPOLYMERS VON CYCLOOLEFIN
COMPLEXE D'HYDRURE DE MÉTAL, PROCÉDÉ D'HYDROGÉNATION D'UN POLYMÈRE OBTENU PAR POLYMÉRISATION PAR OUVERTURE DE CYCLE D'UNE CYCLOOLÉFINE ET PROCÉDÉ SERVANT À PRODUIRE UN PRODUIT D'HYDROGÉNATION D'UN POLYMÈRE OBTEN

(30) Priority: 25.05.2005 JP 2005152163; 22.09.2005 JP 2005276253; 14.10.2005 JP 2005300459
(43) Date of publication of application: 06.02.2008
(73) Proprietor: JSR Corporation, Tokyo 104-0045 (JP)
(72) Inventor: KATSUDA, Kohei, JSR Corporation, Tokyo 104-0045 (JP); FUKUHARA, Seiji, JSR Corporation, Tokyo 104-0045 (JP); MARUYAMA, Yoichiro, JSR Corporation, Tokyo 104-0045 (JP); OKANIWA, Motoki, JSR Corporation, Tokyo 104-0045 (JP); SHIBATA, Hiraku, JSR Corporation, Tokyo 104-0045 (JP); SUWA, Yoshimi, JSR Corporation, Tokyo 104-0045 (JP); KAJIWARA, Ichiro, JSR Corporation, Tokyo 104-0045 (JP)
(74) Representative: TBK
(86) International application number: PCT/JP2006/310398
(87) International publication number: WO 2006/126612

(56) References cited:
- EP-A1- 0 455 154
- GB-A- 2 250 744
- JP-A- 04 202 404
- JP-A- 06 025 325
- US-A- 5 057 581
- MEROLA J S ET AL: "Aqueous chemistry and catalytic activity of organometallic iridium complexes", AQUEOUS ORGANOMETALLIC CHEMISTRY AND CATALYSIS : PROCEEDINGS OF THE NATO ADVANCED RESEARCH WORKSHOP ON AQUEOUS ORGANOMETALLIC CHEMISTRY AND CATALYSIS, DEBRECEN, HUNGARY, AUGUST 29 - SEPTEMBER 1, 1994, vol. 5, no. 3, 1995, pages 33-45, XP009142512, ISBN: 978-0-7923-3703-4
- BARRAL M C ET AL: "Formation of hydride complexes of ruthenium from diruthenium(II,III) carboxylate compounds", INORGANICA CHIMICA ACTA, vol. 186, no. 2, 15 August 1991 (1991-08-15), pages 239-242, XP009142511, ISSN: 0020-1693, DOI: 10.1016/S0020-1693(00)85427-4
- DESHPANDE S S ET AL: "Insertion reactions of acetylenes with hydridoruthenium(II) carboxylates", JOURNAL OF ORGANOMETALLIC CHEMISTRY, vol. 415, no. 2, 10 September 1991 (1991-09-10), pages 265-270, XP009142379, ISSN: 0022-328X, DOI: 10.1016/0022-328X(91)80124-3
- OSAKADA K ET AL: "Preparation and properties of hydride triphenyl-phosphine ruthenium complexes with 3-formyl (or acyl) propionate [RuH(OCOCHRCHRCOR')(PPh3)3] (R = H, CH3, C2H5; R' = H, CH3, C6H5) and with 2-formyl (or acyl) benzoate [RuH(o-OCOC6H4COR')(PPh3)3] (R' = H, CH3)", JOURNAL OF ORGANOMETALLIC CHEMISTRY, vol. 231, no. 1, 11 May 1982 (1982-05-11), pages 79-90, XP009142382, ISSN: 0022-328X, DOI: 10.1016/S0022-328X(00)89230-X
- NAGY-MAGOS Z ET AL: "Carboxylatorhodiumbis(triphenylphosphine) dihydrides: preparation and catalytic activity in homogeneous hydrogenation", TRANSITION METAL CHEMISTRY, vol. 1, 1976, pages 215-219, XP009142392, ISSN: 0340-4285
- DOBSON A ET AL: "Complexes of the platinum metals. V. Perfluorocarboxylato derivatives", JOURNAL OF THE CHEMICAL SOCIETY, DALTON TRANSACTIONS, no. 5, 1975, pages 370-377, XP009142533, ISSN: 0300-9246, DOI: 10.1039/DT9750000370
- HARA Y. ET AL.: 'A Novel Production of gamma-Butyrolactone Catalyzed by Ruthenium Complexes' JOURNAL OF CATALYSIS vol. 194, no. 2, 2000, pages 188 - 197, XP004437899
- CARLTON L.: 'Rhodium-103 NMR of Carboxylate and Thiolate Complexes by Indirect Detection using Phosphorus' MAGNETIC RESONANCE IN CHEMISTRY vol. 35, no. 3, 1997, pages 153 - 158, XP008073134
- BOROWSKI A.F. ET AL.: 'STRUCTURES AND PROPERTIES OF ANTHRANILATO- AND N-PHENYLANTHRANILATO- RHODIUM(I) COMPLEXES CONTAINING TRIPHENYLPHOSPHINE LIGANDS' POLYHEDRON vol. 12, no. 14, 1993, pages 1757 - 1765, XP003004192
- HARTWIG J.F. ET AL.: 'Structure and Reactions of Oxametallacyclobutanes and Oxametallacyclobutenes of Ruthenium' ORGANOMETALLICS vol. 10, no. 9, 1991, pages 3344 - 3362, XP003004193
- JAEENICKE M. ET AL.: 'd8-Eisennitrosylhydride' CHEMISCHE BERICHTE vol. 124, no. 4, 1991, pages 719 - 724, 2A-D, XP008073157
- HARTWIG J.F. ET AL.: 'Mechanism of the C-C Cleavage of Acetone by the Ruthenium Benzyne Complex (PMe3)4Ru(etan-C6H4): Formation and Reactivity of an Oxametallacyclobutane Complex' JOURNAL OF THE AMERICAN CHEMICAL SOCIETY vol. 112, no. 8, 1990, pages 3234 - 3236, XP003004194
- BIRK R. ET AL.: 'Oxidative Addition on tetrakoordinierte Eisenfragmente' CHEMISCHE BERICHTE vol. 121, no. 9, 1988, pages 1557 - 1564, XP008073158
- ROBINSON S.D. ET AL.: 'Complexes of the Platinum Metals. Part II. Carboxylato (triphenylphosphine) Derivatives of Ruthenium Osmium, Rhodium, and Iridium' JOURNAL OF THE CHEMICAL SOCIETY, DALTON TRANSACTIONS: INORGANIC CHEMISTRY no. 18, 1973, pages 1912 - 1920, XP008073155

## Description

### TECHNICAL FIELD

The invention relates to a new metal hydride complex, a method for hydrogenating a cycloolefin ring-opening polymer and a method for producing a hydrogenated product of a cycloolefin ring-opening polymer. More particularly, the invention relates to a new metal hydride complex useful as a hydrogenation catalyst that hydrogenates carbon-carbon unsaturated bonds in alkenes or alkynes and an olefin isomerization catalyst, a method for hydrogenating a cycloolefin ring-opening polymer using the metal hydride complex and a method for producing a hydrogenated product of a cycloolefin ring-opening polymer by using the metal hydride complex.

### BACKGROUND ART

A metal complex such as a ruthenium metal complex and a rhodium metal complex is known as a useful compound which may form a hydrogenation catalyst for carbon-carbon unsaturated bonds in alkenes or alkynes, a hydrosilylation catalyst, a hydroboration catalyst or an olefin isomerization catalyst. Especially, a metal hydride complex having a metal-hydrogen bond is known to have a high catalytic activity. For example, RuHCl (CO) (PPh₃)₃(Ph represents a phenyl group) has been reported to be an excellent catalyst which hydrogenates a carbon-carbon double bond in a polymer (refer to Patent Document 1).

However, a conventionally known metal hydride complex has a low solubility to an organic solvent, and in particular the solubility to a hydrocarbon solvent such as toluene was very low which was approximately 0.03 % by weight. For this reason, in feeding the catalyst solution into a reaction vessel, a dilute catalyst solution had to be used, thereby causing a problem such as the decrease in production efficiency, the increase in the amount of a solvent used and the like. In addition, if the catalyst solution is fed into the reaction vessel at a high concentration, the solution was changed to slurry in a suspended state, thus inevitably resulting in an inaccurate amount of charge.

In order to improve only the solubility of these metal hydride complex catalysts, a method is effective in which a polar solvent such as tetrahydrofuran and ethyl acetate is added in a small amount. However, since these polar solvents are coordination compounds, they have a drawback of causing the decrease in catalytic activity.

Further, as a metal hydride complex to which a carboxylic acid residue is introduced, for example, there has been reported a ruthenium hydride complex to which a CH₃CO₂ group or a CF₃CO₂ group is introduced. It is known that such metal hydride complex may be synthesized by the reaction of a metal dihydride complex with a carboxylic acid, as shown in the following reaction formula (refer to Non-Patent Document 1).

RuH₂L(PPh₃)₃ + RCO₂H → RuH (OCOR)L (PPh₃)₂

(In the above reaction formula, L represents CO or NO and R represents CH₃ or CF₃.)

In this conventional report, the metal hydride complex was limited to two kinds of complexes in which a carboxylic acid residue was CH₃CO₂- or CF₃CO₂-. Although these complexes had a high catalytic activity to the hydrogenation of the carbon-carbon unsaturated bonds of olefins, acetylene or the like, they were poor in practicality for industrially using as a catalyst because they have an extremely low solubility to a hydrocarbon solvent such as toluene and the solubility at 20°C remains less than 0.1 % by weight.

For this reason, in designing the reaction on an industrial scale, in order to realize the reduction of the amount of a solvent used and the accurate control of the feeding amount while maintaining the catalytic activity, it was required to increase the solubility to a hydrocarbon solvent such as toluene which has a weaker coordination power to a metal.

When a metal hydride complex is fed into the reaction system as a catalyst, in order to adjust the total amount of the reaction solvent within an appropriate range, an excessive amount of solvent is desired to be reduced by setting the concentration of a catalyst feeding line to 0.2 % by weight or more, more preferably 1.0 % by weight or more in a process design. In addition, in order to realize the enhancement of the catalytic reaction rate and the increase of the reaction yield, there has been strongly desired the appearance of a catalyst homogeneously dissolved at a high concentration.

Incidentally, a cycloolefin resin has drawn attention as a thermoplastic transparent resin excellent in heat resistance, transparency and optical properties because it has characteristics including a high glass transition temperature due to the rigidity of the main chain structure, amorphous and a high light transmittance due to the presence of a bulky group in the main chain structure and a low birefringence due to the small anisotropy of the refractive index.

As one of such cycloolefin resin, there may be mentioned a resin obtained by ring-opening polymerizing a monomer composition containing dicyclopentadiene (hereinafter, abbreviated as "DCP") which is readily available industrially and inexpensive or its derivative and further hydrogenating the resultant polymer. For example, it is proposed that the resin be applied to optical materials such as optical disks, optical lenses and optical fibers, sealing materials for semiconductor sealing and the like, optical films and sheets or containers of drugs and the like (refer to Patent Documents 2 and 3).

In general, the ring-opening polymer of DCP and its derivative (hereinafter, referred to as a "DCP-based monomer" including DCP) may be obtained by ring-opening polymerizing the DCP-based monomer in the presence of a ring-opening polymerization catalyst such as a metathesis catalyst system in a suitable solvent. Further, its hydrogenated product may be obtained by adding a suitable hydrogenation catalyst to a solution of the ring-opening polymer to react with hydrogen (refer to Patent Documents 4 to 7).

However, since the DCP-based monomer has plural olefinic unsaturated bonds in the molecule, an undesirable crosslinking reaction proceeds during the ring-opening polymerization reaction and hydrogenation reaction, leading to a problem that an insoluble gel is formed in an organic solvent. In addition, the amount of generated heat by the hydrogenation reaction was large because the DCP-based monomer has many olefinic unsaturated bonds, and the feeding amount was not increased with respect to the design temperature of the reactor because the maximum attained temperature increased, resulting in a problem of poor productivity. If the gel is contained in a product, for example, it acts as a foreign material in optical films and causes a serious problem such as a source of light scattering and a film breakage originated from the foreign material when stress is applied. Therefore, it is demanded that the formation of the gel is reduced as low as possible.

As a method for producing a ring-opening polymer which contains substantially no gel and its hydrogenated derivative by using the DCP-based monomer, various methods have been conventionally proposed. For example, it is disclosed in Patent Document 2 that there may be obtained a ring-opening polymer which contains substantially no gel by adding a compound such as a nitrile, a ketone, an ether and an ester as a reaction adjusting agent, in ring-opening polymerizing the DCP-based monomer in the presence of a tungsten-based ring-opening catalyst, and that there may be obtained a hydrogenated product of a ring-opening polymer which contains substantially no gel by hydrogenating the ring-opening polymer using a diatomaceous earth supported nickel catalyst or the like.

However, the conventionally proposed methods require a process for removing the reaction adjusting agent and the like, thus reducing the productivity. In addition, although it was possible to suppress the formation of a relatively large gel which can be visually confirmed, the formation of a so-called microgel with less than submicrometer size was not sufficiently suppressed. For this reason, in a production process of a resin, when filtration was carried out to remove a foreign material and the like, there occurred a problem that a filter was clogged in a short period of time to stop a production line, frequent filter replacement was required or a foreign material was not removed because the filter was broken.

The present applicant has already proposed a production method by a simple process which generates substantially no gel component and has a reduced load in the filtration process (refer to Patent Document 8). However, in this production method, since the hydrogenation reaction is started by starting hydrogenation under a high temperature of 130°C or higher and the maximum attained temperature becomes high, equipment investment is required so that the design temperature of a reactor is increased to increase the feeding amount, and in order to suppress the maximum attained temperature, it is required to adopt conditions such as reduction of the feeding amount, increase of the solvent amount and reduction of the hydrogen feeding rate. Consequently, a further improvement in productivity has been demanded.

For this reason, there has been demanded the advent of a production method having an excellent productivity which contains substantially no gel component, has a reduced load in the filtration process and can carry out the hydrogenation reaction at a low temperature.
[Patent Document 1] Japanese Patent Laid-Open Publication No. H4-202404
[Patent Document 2] Japanese Patent Laid-Open Publication No. H11-124429
[Patent Document 3] Japanese Patent Laid-Open Publication No. H11-130846
[Patent Document 4] Japanese Patent Laid-Open Publication No. S63-264626
[Patent Document 5] Japanese Patent Laid-Open Publication No. H1-158029
[Patent Document 6] Japanese Patent Laid-Open Publication No. H1-168724
[Patent Document 7] Japanese Patent Laid-Open Publication No. H1-168725
[Patent Document 8] Japanese Patent Laid-Open Publication No. 2005-213370
[Non-Patent Document 1] A, Dobson, et al., Inorg. Synth., 17, 126-127 (1977)

Merola et al, Aqueous organometallic chemistry and catalysis: proceedings of the NATO advanced research workshop in aqueous organometallic chemistry and catalysis, Debrecen, Hungary, August 29 - September 1, 1994, vol. 5, no. 3, 1995, pages 33-45 disclose aqueous chemistry and catalytic activity of organometallic iridium complexes.

EP 0455154 A1 discloses a selective hydrogenation of the carbon-carbon double bonds of conjugated diene copolymers using ruthenium catalysts. GB 2250744 A discloses a hydrogenation product of ring-opening polymer produced by hydrogenating, in the presence of a hydrogenation catalyst, the non-aromatic carbon-to-carbon double bond present in a ring-opening polymer. US 5057581 A discloses selective hydrogenation of the carbon-carbon double bonds of conjugated diene copolymers in the presence of certain divalent ruthenium carbonyl complex catalysts containing phosphine ligands having bulky alkyl substituents.

Barral et al, Inorganica chimica acta, vol. 186, no. 2, 15 August 1991 (1991-08-15), pages 239-242 disclose formation of hydride complexes of ruthenium from diruthenium(II,III) carboxylate compounds.

Deshpande et al, Journal of organometallic chemistry, vol. 415, no. 2, 10 September 1991, pages 265-270D disclose insertion reactions of acetylenes with hydridoruthenium(II) carboxylates.

Osakada et al, Journal of organometallic chemistry, vol. 231, no. 1, 11 May 1982 (1982-05-11), pages 79-90 disclose preparation and properties of hydride triphenyl-phosphine ruthenium complexes.

Nagy-Magos et al, Transition metal chemistry, vol. 1, 1976, pages 215-219, disclose carboxylatorhodiumbis(triphenylphosphine) dihydrides: preparation and catalytic activity in homogeneous hydrogenation.

Dobson et al, Journal of the chemical society, Dalton transactions, no. 5, 1975, pages 370-377, disclose Complexes of the platinum metals. V. Perfluorocarboxylato derivatives.

Hara et al, Journal of catalysis, vol. 194, no. 2, 10 September 2000, pages 188-197 disclose a Novel Production of γ-Butyrolactone Catalyzed by Ruthenium Complexes

Carlton, Magnetic resonance in chemistry, vol. 35, no. 3, March 1997, pages 153-158 discloses Rhodium-103 NMR of Carboxylate and Thiolate Complexes by Indirect Detection using Phosphorus

Borowski et al, Polyhedron, vol. 12, no. 14, July 1993, pages 1757-1765, disclose structures and properties of anthranilato- and N-phenylanthranilatorhodium(I)complexes containing triphenylphosphine ligands.

Hartwig et al, Organometallics, vol. 10, no. 9, September 1991, pages 3344-3362, disclose Structure and Reactions of Oxametallacyclobutanes and Oxametallacyclobutenes of Ruthenium.

Jaenicke et al, Chemische Berichte, vol. 124, no. 4, April 1991 , pages 719-724, disclose "d8-Eisennitrosylhydride".

Hartwig et al, Journal of the American chemical society, vol. 112, no. 8, April 11 1990, pages 3234-3236, disclose Mechanism of the C-C Cleavage of Acetone by the Ruthenium Benzyne Complex (PMe₃)₄Ru(η²-C₆H₄): Formation and Reactivity of an Oxametallacyclobutane Complex.

Birk et al, Chemische Berichte, vol. 121 , no. 9, September 1988, pages 1557-1564, disclose "Oxidative Addition an tetrakoordinierte Eisenfragmente".

Robinson et al, Journal of the chemical society, no. 18, 1973, pages 1912-1920, disclose Complexes of the Platinum Metals. Part II. Carboxylato (triphenylphosphine) Derivatives of Ruthenium Osmium, Rhodium, and Iridium.

### DISCLOSURE OF THE INVENTION

### PROBLEMS TO BE SOLVED BY THE INVENTION

An object of the invention is to provide a metal hydride complex which has a high solubility to an organic solvent, especially a hydrocarbon solvent such as toluene and has a high activity as a hydrogenation catalyst, and a hydrogenation method of a cycloolefin ring-opening (co) polymer using the metal hydride complex.

Further, another object of the invention is to provide a method for producing a hydrogenated product of a cycloolefin ring-opening polymer which, when a (co)polymer of a cycloolefin compound having plural olefinic unsaturated bonds in the molecule is hydrogenated, suppresses gel formation, has a reduced load in the filtration process and produces a hydrogenated product of a cycloolefin ring-opening polymer which contains substantially no gel component including a micro gel with high productivity.

### MEANS FOR SOLVING THE PROBLEMS

The present invention relates to a metal hydride complex according to claim 1 and a method according to claim 5. Further beneficial developments are set forth in the dependent claims.

As a result of earnest studies to solve the above problems, the present inventors have found that a metal hydride complex to which an aromatic carboxylic acid residue is introduced significantly improves the solubility to toluene and the like and exhibits a high activity to the hydrogenation reaction of an unsaturated hydrocarbon.

Furthermore, the present inventors have found that, in hydrogenating a (co)polymer of a cycloolefin compound having plural olefinic unsaturated bonds in the molecule, the formation of gel component may be suppressed by preparing a cycloolefin (co)polymer solution in advance at a low temperature in the presence of a specific metal hydride complex and then contacting with hydrogen, and the feeding amount may be increased by decreasing the maximum attained temperature of the hydrogenation reaction without changing the design temperature of a reactor and thus the productivity may be significantly increased. In particular, the present inventors have found that, when a carboxylic acid-modified ruthenium complex is used as a hydrogenation catalyst, the formation of gel component including a microgel may be effectively suppressed.

A metal hydride complex of the invention is represented by the one of the formulas

RuH(OCOPh-OC₂H₅)(CO)(PPh₃)₂,

RuH(OCOPh-NH₂)(CO)(PPh3)₂,

and

RuH(OCOPh-R)(CO)(PPh₃)₂,

wherein R represents an alkyl group having 2 to 18 carbon atoms.

A metal hydride complex of the invention has a toluene solubility at 20°C of 1.0 % by weight or more.

A hydrogenation method of a cycloolefin ring-opening polymer of the invention is characterized in that the hydrogenation reaction of the cycloolefin ring-opening polymer is carried out in the presence of the metal hydride complex of the invention. As the cycloolefin ring-opening polymer, preferable is a ring-opening (co)polymer of a monomer containing one or more kinds selected from the compounds represented by formulas (I), (II) and (III).

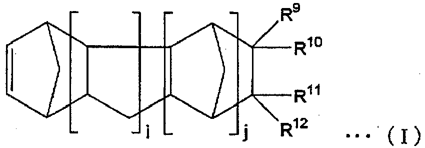

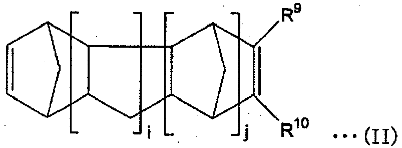

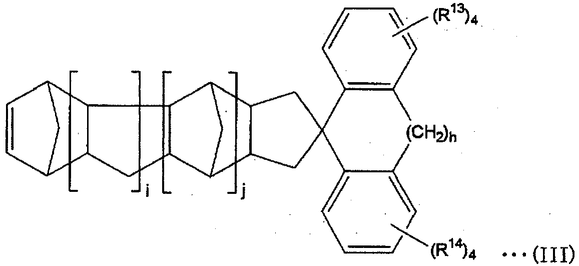

In formulas (I), (II) and (III), R⁹ to R¹⁴ each independently represent a hydrogen atom, a halogen atom, a hydrocarbon group having 1 to 30 carbon atoms or other monovalent organic group, R⁹ and R¹⁰ or R¹¹ and R¹² may together form a divalent hydrocarbon group and R⁹ or R¹⁰ and R¹¹ or R¹² may be bonded together to form a monocyclic or polycyclic structure. Letters h, i and j each independently are 0 or a positive integer.

A method for producing a hydrogenated product of a cycloolefin ring-opening polymer of the invention is characterized in that a monomer containing a cycloolefin compound represented by formula (II) is ring-opening polymerized and a solution of the resulting ring-opening polymer is adjusted to a temperature of 40°C or more and less than 120°C in advance and subsequently the hydrogenation reaction is started by contacting the solution with hydrogen in the presence of the metal hydride complex of the invention.

A method for producing a hydrogenated product of a cycloolefin ring-opening polymer of the invention is preferably characterized in that a ring-opening copolymer obtained by copolymerizing monomers containing a compound represented by formula (II) and a compound represented by formula (I) is hydrogenated.

In a method for producing a hydrogenated product of a cycloolefin ring-opening polymer of the invention, in the resulting hydrogenated product of a cycloolefin ring-opening polymer, when a polymer solution having a solid component concentration of 20 % by weight is continuously filtered at 50°C under a nitrogen pressure of 3.0 kgf/cm² by using three filters with an average pore size of 2.0 µm and a filtration area of 2000 cm², with an average pore size of 1.0 µm and a filtration area of 2000 cm² and with an average pore size of 0.2 µm and a filtration area of 1800 cm² that are connected serially in the order of decreasing filter pore size, a ratio of the filtration rate after one hour to the filtration rate after 1000 hours from the start of filtration is preferably 0.85 to 1.00.

### EFFECT OF THE INVENTION

The invention can provide a new metal hydride complex which is soluble in low polar organic solvents such as hydrocarbon solvents at a high concentration and has a high catalytic activity to hydrogenate carbon-carbon double bonds. For this reason, if a metal hydride complex of the invention is used as a hydrogenation catalyst, the metal hydride complex dissolved in a solvent at a high concentration may be fed into the reaction system, thereby enabling reduction of the amount of solvent and facilitating handling of controlling the feeding amount, as well as enabling an increase in the industrial production efficiency.

A metal hydride complex of the invention is suitable as a catalyst especially in the hydrogenation reaction of a cycloolefin ring-opening polymer, and the invention can provide an excellent hydrogenation method of a cycloolefin ring-opening polymer.

Further, the invention can produce a hydrogenated product of a cycloolefin polymer which has a very low content of gel component including a microgel or contains substantially no gel component by carrying out the hydrogenation of a polymer or copolymer of an cycloolefin compound having plural olefinic unsaturated bonds in the molecule so that the formation of gel components is suppressed by a simple process.

Since a hydrogenated product of a cycloolefin polymer obtained by the invention has a very low content of gel component, it may be used by molding to a desired shape accordingly without requiring removal of gel component by an advanced filtration and may be suitably used in the applications to various optical components and molded products such as electric and electronic materials.

### BRIEF DESCRIPTION OF THE DRAWINGS

[Figure 1] Fig. 1 shows a ¹H-NMR spectrum of a ruthenium hydride complex obtained in Example 1.
[Figure 2] Fig. 2 shows a ¹H-NMR spectrum of a ruthenium hydride complex obtained in Example 2.
[Figure 3] Fig. 3 shows a ¹H-NMR spectrum of a ruthenium hydride complex obtained in Example 3.
[Figure 4] Fig. 4 shows a ³¹P-NMR spectrum of a ruthenium hydride complex obtained in Example 1.
[Figure 5] Fig. 5 shows a ³¹P-NMR spectrum of a ruthenium hydride complex obtained in Example 2.
[Figure 6] Fig. 6 shows a ³¹P-NMR spectrum of a ruthenium hydride complex obtained in Example 3.
[Figure 7] Fig. 7 shows an IR spectrum of a ruthenium hydride complex obtained in Example 1.
[Figure 8] Fig. 8 shows an IR spectrum of a ruthenium hydride complex obtained in Example 2.
[Figure 9] Fig. 9 shows an IR spectrum of a ruthenium hydride complex obtained in Example 3.
[Figure 10] Fig. 10 shows a ¹H-NMR chart of a copolymer (before hydrogenation) obtained in Example 9. A signal of an unsaturated bond (double bond) can be observed in the vicinity of 5.1 to 5.8 ppm and a signal of a methoxy group can be observed at 3.7 ppm.
[Figure 11] Fig. 11 shows a ¹H-NMR chart of a copolymer (hydrogenated product) after the hydrogenation obtained in Example 9. A signal of a methoxy group can be observed at 3.7 ppm but an unsaturated bond (double bond) cannot be observed in the vicinity of 5.1 to 5.8 ppm.
[Figure 12] Fig. 12 shows a ¹H-NMR chart of a copolymer (before hydrogenation) obtained in Example 10. A signal of an unsaturated bond (double bond) can be observed in the vicinity of 5.1 to 5.8 ppm and a signal of a methoxy group can be observed at 3.7 ppm.
[Figure 13] Fig. 13 shows a ¹H-NMR chart of a copolymer (hydrogenated product) after the hydrogenation obtained in Example 10. A signal of a methoxy group can be observed at 3.7 ppm but an unsaturated bond (double bond) cannot be observed in the vicinity of 5.1 to 5.8 ppm

### BEST MODE FOR CARRYING OUT THE INVENTION

Hereinafter, the invention will be explained in detail.

Incidentally, in the invention, a cycloolefin polymer includes not only a homopolymer or copolymer of a monomer consisting of at least one kind of cycloolefin compound but also a copolymer obtained by copolymerizing a monomer consisting of a cycloolefin compound and other copolymerizable compound. In the invention, a ring-opening polymerization stands for both a ring-opening polymerization and a ring-opening copolymerization, and a ring-opening polymer stands for both a ring-opening polymer and a ring-opening copolymer. Further, unless otherwise specified, the hydrogenation (hydrogen addition) in the invention is carried out for an aliphatic olefinic unsaturated bond which is not ring-opening polymerized, such as an olefinic unsaturated bond in the cycloolefin polymer main chain formed by the metathesis ring-opening polymerization and an unsaturated bond at the five-membered ring side of DCP, but not for other unsaturated bond such as an aromatic unsaturated bond.

A metal hydride complex of the invention may be obtained, for example, by a reaction of the corresponding metal polyhydride complex with a carboxylic acid. In addition, the metal polyhydride complex may be obtained by reacting the corresponding metal halide hydride complex with a basic reagent such as KOH and the like in an alcohol solvent. The reaction scheme is shown below.

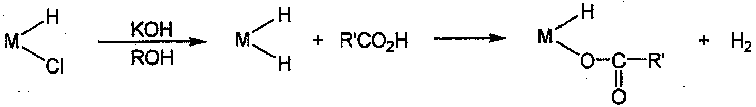

-OCOR' in the reaction scheme corresponds to Q in formula (1).

A method of the reaction is as follows. First, an alcohol solution of a metal halide hydride complex is added to a reaction vessel under an atmosphere of nitrogen or argon and then an alcohol solution of KOH is added dropwise to react for a given length of time to obtain a metal dihydride complex. Next, to the resultant metal dihydride complex is added a specific carboxylic acid to react for a given length of time, yielding the target complex as a precipitate. The supernatant is filtered or separated by decantation and then the precipitate is washed with a low solubility solvent such as methanol where necessary, followed by further drying the residual solvent to obtain the target product.

The temperature of the reaction system is not particularly restricted but the system is operated at a temperature range of -20 to 200°C depending on the acidity of carboxylic acid. Further, the amount of carboxylic acid used is not particularly restricted, but in order to maintain the conversion rate of a metal polyhydride complex to 90 % or more, carboxylic acid is preferably added in an amount of 1 part or more, preferably 3 parts or more and more preferably 5 parts or more, relative to 1 part of a metal polyhydride complex.

An alcohol is used as a solvent for the reaction in which a metal dihydride complex is obtained from a metal halide hydride complex. As the alcohol, there may be mentioned, for example, methanol, ethanol, propanol, butanol, pentanol, hexanol, octanol, 2-methoxyethanol, diethyleneglycol and the like. These may be used alone or in a combination of two or more kinds.

A solvent may be selected and used arbitrarily as needed for the reaction in which a metal hydride complex which is the final target compound is obtained from a metal dihydride complex. As the solvent, there may be used, for example, an alicyclic hydrocarbon solvent such as cyclohexane, cyclopentane and methylcyclopentane; an aliphatic hydrocarbon solvent such as hexane, heptane and octane; an aromatic hydrocarbon solvent such as toluene, benzene, xylene and mesitylene; a halogenated hydrocarbon solvent such as chloromethane, dichloromethane, 1,2-dichloroethane, 1,1-dichloroethane, tetrachloroethane, chloroform, carbon tetrachloride, chlorocyclopentane, chlorocyclohexane, chlorobenzene and dichlorobenzene; an alcohol-based solvent such as methanol, ethanol, propanol, butanol, pentanol, hexanol, octanol, 2-methoxyethanol and diethyleneglycol; and the like.

The above-mentioned solvents may be used alone or in a combination of two or more kinds. Among these, from a viewpoint of solubility of raw materials, insolubility of products and versatility, preferably used is an alcohol-based solvent or a mixed solvent containing an alcohol-based solvent. Further, the reaction may be carried out without using any solvent, depending on conditions.

The method for drying a complex is not particularly restricted and there may be employed a method of removing the residual solvent under a reduced pressure and a method of evaporating the residual solvent by exposing to a nitrogen or argon flow under normal pressure.

Further, a metal hydride complex of the invention may be produced in one-pot from MCl₃. (H_{2O})ₘ by the reaction scheme as shown below.

Firstly, MClₙ.(H₂O)ₘ (wherein, M is Ru, Rh, Os or Ir and m is an integer of 0 to 3) is reacted with formaldehyde in the presence of a compound which can form a phosphorus ligand to form a metal halide hydride complex. Next, the metal halide hydride complex is reacted with an alkali metal hydroxide in an alcohol solvent to form a metal dihydride complex. Further, the metal dihydride complex is not isolated from the reaction system and is reacted with a carboxylic acid R¹COOH. A metal hydride complex may be produced in one-pot by this reaction scheme. As an example, a reaction scheme using RuCl₃ · 3H₂O is shown below.

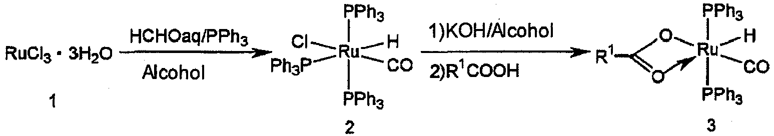

A metal hydride complex of the invention has a high activity as a catalyst for a hydrogenation reaction of a carbon-carbon unsaturated bond such as alkene and alkyne, hydrosilylation reaction, hydroboration reaction, hydrostannylation reaction, olefin isomerization reaction and the like. Especially, the metal hydride complex may attain a hydrogenation rate of 99.8 % or more for the hydrogenation reaction of a ring-opening metathesis polymer of norbornene system. For this reason, a metal hydride complex of the invention may be widely used for these catalytic reactions on laboratory or industrial scale.

Such metal hydride complex of the invention is homogeneously dissolved at a high concentration in a hydrocarbon solvent such as benzene, toluene, xylene, cyclohexane, methylcyclohexane and the like, depending on the type. A metal hydride complex employed in the method of the invention has a toluene solubility at 20°C of preferably 0.2 % by weight or more, more preferably 0.2 % by weight or more and 10 % weight or less and further more preferably 1.0 % by weight more and 10 % weight or less. If the toluene solubility is less than 0.2 % by weight, the solubility is low, requiring an increase in the added amount of catalyst. If the solubility exceeds 10 % by weight, the removal of the catalyst is likely to become difficult.

### Hydrogenation Method of Cycloolefin Ring-Opening Polymer

A method of hydrogenating a cycloolefin ring-opening polymer of the invention is carried out by hydrogenating a cycloolefin ring-opening polymer using the metal hydride complex of the invention as a catalyst. As the methods and conditions of the hydrogenation reaction, general methods and conditions of the hydrogenation reaction may be employed except that a metal hydride complex of the invention is used. Meanwhile, since a metal hydride complex of the invention has a high solubility to a hydrocarbon solvent such as toluene, it may be fed into the reaction system at a high concentration. Accordingly, the reaction efficiency may be improved and the amount of a solvent for a feeding catalyst may be reduced. Further, since the catalyst may be used as a homogeneous solvent system, the added amount of a catalyst may be easily controlled.

### Cycloolefin Ring-Opening Polymer

As the cycloolefin ring-opening polymer used for the hydrogenation method of a cycloolefin ring-opening polymer of the invention, any of ring-opening metathesis (co)polymers of a monomer containing the cycloolefin compound having a norbornene structure may be used. That is, as the cycloolefin ring-opening polymer used as a raw material, it may be a ring-opening (co)polymer of one or more kinds of cycloolefin compounds or a ring-opening copolymer of one or more kinds of cycloolefin compounds and other copolymerizable compound.

### - Monomer

In the hydrogenation method of the invention, a cycloolefin ring-opening polymer is preferably a ring-opening (co) polymer of a monomer containing one or more kinds selected from the compounds represented by formulas (I), (II) and (III).

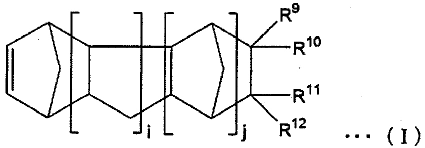

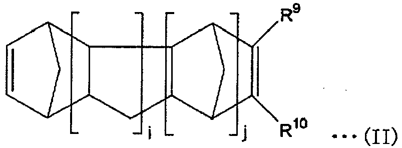

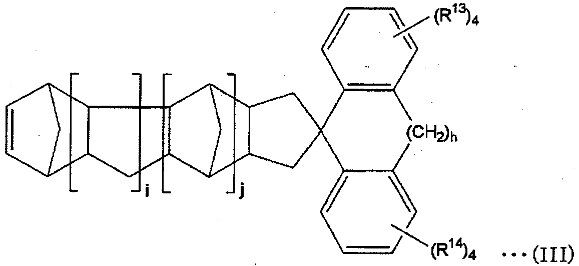

In formulas (I), (II) and (III), R⁹ to R¹⁴ each independently represents a hydrogen atom, a halogen atom, a hydrocarbon group having 1 to 30 carbon atoms or other monovalent organic group, R⁹ and R¹⁰ or R¹¹ and R¹² may together form a divalent hydrocarbon group and R⁹ or R¹⁰ and R¹¹ or R¹² may be bonded together to form a monocyclic or polycyclic structure. Letters h, i and j each independently are 0 or a positive integer. As the hydrocarbon group having 1 to 30 carbon atoms in the R⁹ to R¹⁴, preferable are an aliphatic hydrocarbon group having 1 to 10 carbon atoms, an alicyclic hydrocarbon group and an aromatic hydrocarbon group. In addition, as the other monovalent organic group, there may be mentioned, for example, polar groups such as alkoxy group, hydroxyl group, ester group, cyano group, nitro group, amide group, amino group and thiol group, and a group substituted with a halogen atom and/or the polar group, and the like.

Specific examples of such cycloolefin compound are shown below, but the invention is not limited by these specific examples.

As the cycloolefin compound (hereinafter also called "compound (I)") represented by the general formula (I), preferably used is a compound in which j equals 0 in formula (I). In addition, in formula (I), i is preferably 0 or an integer of 1 to 3 and more preferably equals 1. As such compound (I), there may be mentioned, for example, the following compounds:
bicyclo[2.2.1]hept-2-ene (norbornene),
tricyclo[4.4.0.1^{2,5}]-3-undecene,
tetracyclo[4.4.0.1^{2,5}.1^{7,10}]-3-dodecene,
pentacyclo[6.5.1.1^{3,6}.0^{2,7}.0^{9,13}]-4-pentadecene,
5-methylbicyclo[2.2.1]hept-2-ene,
5-ethylbicyclo[2.2.1]hept-2-ene,
5-methoxycarbonylbicyclo[2.2.1]hept-2-ene,
5-methyl-5-methoxycarbonylbicyclo[2.2.1]hept-2-ene,
5-cyanobicyclo[2.2.1]hept-2-ene,
8-methoxycarbonyltetracyclo[4.4.0.1^{2,5}.1^{7,10}]-3-dodecene,
8-ethoxycarbonyltetracyclo[4.4.0.1^{2,5}.1^{7,10}]-3-dodecene,
8-n-propoxycarbonyltetracyclo [4.4.0.1^{2,5}.1^{7,10}]-3-dodecene,
8-isopropoxycarbonyltetracyclo[4.4.0.1^{2,5}.1^{7,10}]-3-dodecene,
8-n-butoxycarbonyltetracyclo[4.4.0.1^{2,5}.1^{7,10}]-3-dodecene,
8-methyl-8-methoxycarbonyltetracyclo[4.4.0.1^{2,5}.1^{7,10}]-3-dodecene,
8-methyl-8-ethoxycarbonyltetracyclo[4.4.0.1^{2,5}.1^{7,10}] -3-dodecene,
8-methyl-8-n-propoxycarbonyltetracyclo[4.4.0,1^{2,5}.1^{7,10}]-3-dodecene,
8-methyl-8-isopropoxycarbonyltetracyclo[4.4.0.1^{2,5}.1^{7,10}]-3-dodecene,
8-methl-8-n-butoxycarbonyltetracyclo[4.4.0.1^{2,5}.1^{7,10}]-3-dodecene,
5-ethylidenebicyco[2.2.1]hept-2-ene,
8-ethylidnetetracyclo[4.4.0.1^{2,5},1^{7,10}] -3-dodecene,
5-phenylbicyclo[2.2.1]hept-2-ene,
8-phenyltetracyclo[4.4.0.1^{2,5},1^{7,10}] -3-dodecene,
5-fluorobicyclo[2.2.1]hept-2-ene,
5-fluoromethylbicyclo[2.2.1]hept-2-ene,
5-trifluoromethylbicyclo[2.2.1]hept-2-ene,
5-pentafluoroethylbicyclo[2.2.1]hept-2-ene,
5,5-difluorobicyclo[2.2.1]hept-2-ene,
5,6-difluorobicyclo[2.2.1]hept-2-ene,
5,5-bis(trifluoromethyl)bicyclo[2.2.1]hept-2-ene,
5,6-bis(trifluoromethyl)bicyclo[2.2.1]hept-2-ene,
5-methyl-5-trifluoromethylbicyclo[2.2.1]hept-2-ene,
5,5,6-trifluorobicyclo[2.2.1]hept-2-ene,
5,5,6-tris(fluoromethyl)bicyclo[2.2.1]hept-2-ene,
5,5,6,6-tetrafluobicyclo[2.2.1]hept-2-ene,
5,5,6,6-tetrakis(trifluoromethyl)bicyclo[2.2.1]hept-2-ene,
5,5-difluoro-6,6-bis(trifluoromethyl)bicyclo[2.2.1]hept-2-ene,
5,6-difluoro-5,6-bis(trifluoromethyl)bicyclo[2.2.1]hept-2-ene,
5,5,6-trifluoro-5-trifluoromethylbicyclo[2.2.1]hept-2-ene,
5-fluoto-5-pentafluoroethyl-6,6-bis(trifluoromethyl)bicyclo [2.2.1]hept-2-ene,
5,6-difluoro-5-heptafluoto-iso-propyl-6-trifluoromethylbicyclo [2.2.1]hept-2-ene,
5-chloro-5,6,6-trifluorobicyclo[2.2.1]hept-2-ene,
5,6-dichloro-5,6-bis(trifluoromethyl)bicyclo[2.2.1]hept-2-ene,
5,5,6-trifluoro-6-trifluoromethoxybicyclo[2.2.1]hept-2-ene,
5,5,6-trifluoro-6-heptafluoropropoxybicyclo[2.2.1]hept-2-ene,
8-fluorotetracyclo[4.4.0.1^{2,5}.1^{7,10}]-3-dodecene,
8-fluoromethyltetracyclo[4.4.0.1^{2,5}.1^{7,10}]-3-dodecene,
8-difluoromethyltetracyclo[4.4.0.1^{2,5}.1^{7,10}]-3-dodecene,
8-trifluoromethyltetracyclo[4.4.0.1^{2,5}.1^{7,10}]-3-dodecene,
8-pentafluoroethyltetracyclo[4.4.0.1^{2,5}.1^{7,10}]-3-dodecene,
8, 8-difluorotetracyclo [4.4.0.1^{2,5}.1^{7,10}] -3-dodecene,
8, 9-difluorotetracyclo[4.4.0.1^{2,5}.1^{7,10}]-3-dodecene,
8, 8-bis (trifluoromethyl)tetracyclo[4.4.0.1^{2,5}.1^{7,10}]-3-dodecene,
8,9-bis (trifluoromethyl) tetracyclo [4.4.0.1^{2,5}.1^{7,10}] -3-dodecene,
8-methyl-8-trifluoromethyltetracyclo[4.4.0.1^{2,5}.1^{7,10}]-3-dodecene,
8,8,9-trifluorotetracyclo[4.4.0.1^{2,5}.1^{7,10}]-3-dodecene,
8,8,9-tris(trifluoromethyl)tetracyclo[4.4.0.1^{2,5}.1^{7,10}]-3-dodecene,
8, 8, 9, 9-tetrafluorotetracyclo [4.4.0.1^{2,5}.1^{7,10}]-3-dodecene,
8,8,9,9-tetrakis(trifluoromethyl)tetracyclo[4.4.0.1^{2,5}.1^{7,10}] -3-dodecene,
8,8-difluoro-9,9-bis(trifluoromethyl)tetracyclo[4.4.0.1^{2,5}.1^{7,10}]-3-dodecene,
8,9-difluoro-8,9-bis(trifluoromethyl)tetracyclo[4.4.0.1^{2,5}.1^{7,10}]-3-dodecene,
8,8,9-trifluoro-9-trifluoromethyltetracyclo[4.4.0.1^{2,5}.1^{7,10}]-3-dodecene,
8,8,9-trifluoro-9-trifluoromethoxytetracyclo[4.4.0.1^{2,5}.1^{7,10}]-3-dodecene,
8,8,9-trifluoro-9-pentafluoropropoxytetracyclo[4.4.0.1^{2,5}.1^{7,10}]-3-d odecene,
8-fluoro-8-pentafluoroethyl-9,9-bis(trifluoromethyl)tetracyclo [4.4.0.1^{2,5}.1^{7,10}]-3-dodecene,
8,9-difluoro-8-heptafluoro-isopropyl-9-trifluoromethyltetracyclo [4.4.0.1^{2,5}.1^{7,10}]-3-dodecene,
8-chloro-8,9,9-trifluorotetracyclo[4.4.0.1^{2,5}.1^{7,10}]-3-dodecene,
8,9-dichloro-8,9-bis(trifluoromethyl)tetracyclo[4.4.0.1^{2,5}.1^{7,10}]-3-dodecene,
8-((2,2,2-trifluoroethoxycarbonyl)tetracyclo[4.4.0.1^{2,5}.1^{7,10}]-3-dodecene,
8-methyl-8-(2,2,2-trifluoroethoxycarbonyl)tetracyclo [4.4.0.1^{2,5}.1^{7,10}]-3-dodecene,
5-cyclohexyl-bicyclo[2.2.1]hept-2-ene,
5-((4-biphenyl)bicyclo[2.2.1]hept-2-ene,
5-phenoxycarbonyl-bicyclo[2.2.1]hept-2-ene,
5-pherioxyethylcarbonyl-bicyclo[2.2.1]hept-2-ene,
5-phenylcarbonyloxy-bicyclo[2.2.1]hept-2-ene,
5-methyl-5-phenoxycarbonyl-bicyclo[2.2.1]hept-2-ene,
5-methyl-5-phenoxyethylcarbonyl-bicyclo[2.2.1]hept-2-ene,
5-vinyl-bicyclo[2.2.1]hept-2-ene,
5,5-dimethyl-bicyclo[2.2.1]hept-2-ene,
5,6-dimethyl-bicyclo[2.2.1]hept-2-ene,
5-chloro-bicyclo[2.2.1]hept-2-ene,
5-bromo-bicyclo[2.2.1]hept-2-ene,
5,6-dichoro-bicyclo[2.2.1]hept-2-ene,
5,6-dibromo-bicyclo[2.2.1]hept-2-ene,
5-hydroxy-bicyclo[2.2.1]hept-2-ene,
5-hydroxyethyl-bicyclo[2.2.1]hept-2-ene,
5-amino-bicyclo[2.2.1]hept-2-ene,
tricyclo[4.3.0.1^{2,5}]dec-3-ene,
7-methyl-tricyclo [4.3.0.1^{2,5}] dec-3-ene,
7-ethyl-tricyclo[4.3.0.1^{2,5}]dec-3-ene,
7-cyclohexyl-tricyclo[4.3.0.1^{2,5}]dec-3-ene,
7-phenyl-tricyclo [4.3.0.1^{2,5}] dec-3-ene,
7-((4-biphenyl)-tricyclo[4.3.0.1^{2,5}]dec-3-ene,
7,8-dimethyl-tricyclo[4.3.0.1^{2,5}]dec-3-ene,
7,8,9-trimethyl-tricyclo[4.3.0.1^{2,5}]dec-3-ene,
8-methyl-tricyclo[4.4 .0.1²,⁵] undec-3-ene,
8-phenyl-tricyclo[4.4.0.1^{2,5}]undec-3-ene,
7-fluoro-tricyclo [4.3.0.1^{2,5}] dec-3-ene,
7-chloro-tricyclo [4.3.0.1^{2,5}] dec-3-ene,
7-bromo-tricyclo [4.3.0.1^{2,5}] dec-3-ene,
7,8-dichloro-tricyclo[4.3.0.1^{2,5}]dec-3-ene,
7,8,9-trichloro-tricyclo[4.3.0.1²,⁵]dec-3-ene,
7-chloromethyl-tricyclo[4.3.0.1^{2,5}]dec-3-ene,
7-dichloromethyl-tricyclo[4.3.0.1^{2,5}]dec-3-ene,
7-trichloromethyl-tricyclo[4.3.0.1^{2,5}]dec-3-ene,
7-hydroxy-tricyclo[4.3.0.1^{2,5}]dec-3-ene,
7-cyano-tricyclo[4.3.0.1^{2,5}]dec-3-ene,
7-amino-tricyclo[4.3.0.1^{2,5}]dec-3-ene,
pentacyclo[7.4.0.1^{2,5}.1^{8,11}.0^{7,12}]pentadec-3-ene,
hexacyclo[8.4.0.1^{2,5}.1^{7,14}.1^{9,12}.0^{8,13}]heptadec-3-ene,
8-methyl-tetracyclo[4.4.0.1^{2,5}.1^{7,10}]dodec-3-ene,
8-ethyl-tetracyclo[4.4.0.11^{2,5}.1^{7,10}]dodec-3-ene,
8-cyclohexyl-tetracyclo[4.4.0.1^{2,5}.1^{7,10}]dodec-3-ene,
8-((4-biphenyl)-tetracyclo[4.4.0.1^{2,5}.1^{7,10}]dodec-3-ene,
8-phenoxycarbonyl-tetracyclo[4.4.0.1^{2,5}.1^{7,10}]dodec-3-ene,
8-phenoxyethylcarbonyl-tetracyclo[4.4.0.1^{2,5}.1^{7,10}]dodec-3-ene,
8-phenylcarbonyloxy-tetracyclo[4.4.0.1^{2,5}.1^{7,10}]dodec-3-ene,
8-methyl-8-phenoxycarbonyl-tetracyclo[4.4.0.1^{2,5}.1^{7,10}]dodec-3-ene,
8-methyl-8-phenoxyethylcarbonyl-tetracyclo[4.4.0.1^{2,5}.1^{7,10}]dodec-3-ene,
8-vinyl-tetracyclo[4.4.0.1^{2,5}.1^{7,10}]dodec-3-ene,
8,8-dimethyl-tetracyclo[4.4.0.1^{2,5}.1^{7,10}]dodec-3-ene,
8,9-dimethyl-tetracyclo[4.4.0.1^{2,5}.1^{7,10}]dodec-3-ene,
8-chloro-tetracyclo[4.4.0.1^{2,5}.1^{7,10}]dodec-3-ene;
8-bromo-tetracyclo[4.4.0.1^{2,5}.1^{7,10}] dodec-3-ene,
8,8-dichloro-tetracyclo[4.4.0.1^{2,5}.1^{7,10}]dodec-3-ene,
8,9-dichloro-tetracyclo[4.4.0.1^{2,5}.1^{7,10}] dodec-3-ene,
8,8,9,9-tetrachloro-tetracyclo[4.4.0.1^{2,5}.1^{7,10}]dodec-3-ene,
8-hydroxy-tetracyclo[4.4.0.1^{2,5}.1^{7,10}]dodec-3-ene,
8-hydroxyethyl-tetracyclo[4.4.0.1^{2,5}.1^{7,10}]dodec-3-ene,
8-methyl-8-hydroxyethyl-tetracyclo[4.4.0.1^{2,5}.1^{7,10}]dodec-3-ene,
8-cyano-tetracyclo[4.4.0.1^{2,5}.1^{7,10}]dodec-3-ene, and
8-amino-tetracyclo[4.4.0.1^{2,5}.1^{7,10}]dodec-3-ene.

Further, as the cycloolefin compound (hereinafter also called "compound (II)") represented by formula (II), there may be mentioned, for example, the following compounds:
bicyclo[2.2.1]hepta-2,5-diene,
5-methylbicyclo[2.2.1]hepta-2,5-diene,
5-ethylbicyclo[2.2.1]hepta-2,5-diene,
5-methoxycarbonylbicyclo[2.2.1]hepta-2,5-diene,
tricyclo[4.3.0.1^{2,5}]deca-3,8-diene (DCP),
pentacyclo[8.3.0.1^{2,9}.1^{4,7}.0^{3,8}]pentadeca-5,12-diene,
heptacyclo[12.3.0.1^{2,13}.1^{4,11}.1^{6,9}.0^{3,12}.0^{5,10}]eicosane-7,16-diene,
8-methyl-tricyclo[4.3.0.1^{2,5}]deca-3,8-diene,
8-ethyl-tricyclo[4.3.0.1^{2,5}]deca-3,8-diene,
8-cyclohexyl-tricyclo[4.3.0.1^{2,5}]deca-3,8-diene,
8-phenyl-tricyclo[4.3.0.1^{2,5}]deca-3,8-diene,
8-((4-biphenyl)-tricyclo[4.3.0.1^{2,5}]deca-3,8-diene,
8-methoxycarbonyl-tricyclo[4.3.0.1^{2,5}]deca-3,8-diene,
8-phenoxycarbonyl-tricyclo[4.3.0.1^{2,5}]deca-3,8-diene,
8-methoxycarbonylethyl-tricyclo[4.3.0.1^{2,5}]deca-3,8-diene,
8-methoxycarbonylethyloxy-tricyclo[4.3.0.1^{2,5}]deca-3,8-diene,
8-methyl-9-methoxycarbonyl-tricyclo[4.3.0.1^{2,5}]deca-3,8-diene,
8,9-dimethyl-tricyclo[4.3.0.1^{2,5}]deca-3,8-diene,
8-fluoro-tricyclo[4.3.0.1^{2,5}]deca-3,8-diene,
8-chloro-tricyclo[4.3.0.1^{2,5}]deca-3,8-diene,
8-bromo-tricyclo[4.3.0.1^{2,5}]deca-3,8-diene, and
8,9-dichloro-tricyclo[4.3.0.1^{2,5}]deca-3,8-diene.

Furthermore, as the cycloolefin compound (hereinafter also called "compound (III)") represented by formula (III), there may be mentioned, for example, the following compounds: 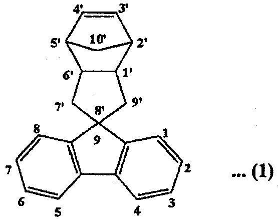
(1) spiro[fluorene-9,8'-tricyclo[4.3.0.1^{2.5}]dec-3-ene], 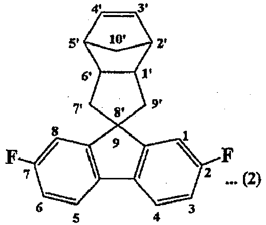
(2) spiro[2,7-difluorofluorene-9,8'-tricyclo[4.3.0.1^{2.5}] dec-3-ene], 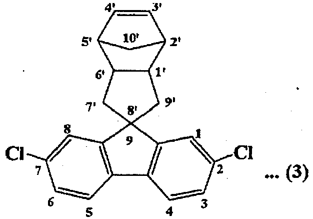
(3) spiro[2,7-dichlorofluorene-9,8'-tricyclo[4.3.0.1^{2.5}] dec-3-ene], 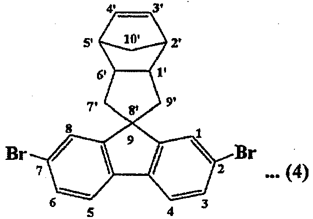
(4) spiro[2,7-dibromofluorene-9,8'-tricyclo[4.3.0.1^{2.5}] d ec-3-ene], 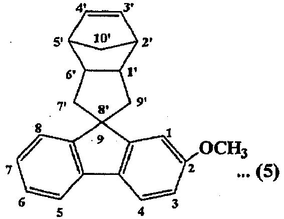
(5) spiro[2-methoxyfluorene-9,8'-tricyclo[4.3.0.1^{2.5}] dec-3-ene], 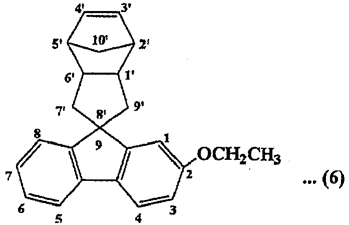
(6) spiro[2-ethoxyfluorene-9,8'-tricyclo[4.3.0.1^{2.5}] dec-3-ene], 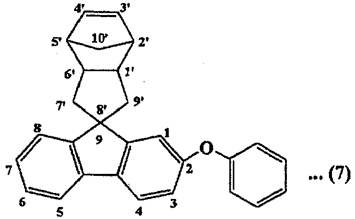
(7) spiro[2-phenoxyfluorene-9,8'-tricyclo[4.3.0.1^{2.5}] dec-3-ene], 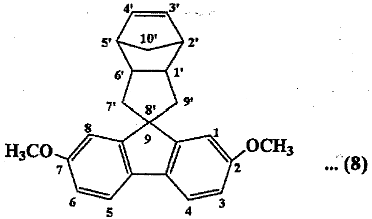
(8) spiro[2,7-dimethoxyfluorene-9,8'-tricyclo [4.3.0.1^{2.5}]dec-3-ene], 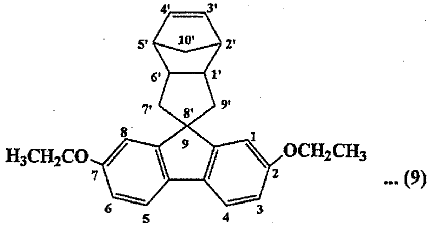
(9) spiro[2,7-diethoxyfluorene-9,8'-tricyclo[4.3.0.1^{2.5}] dec-3-ene], 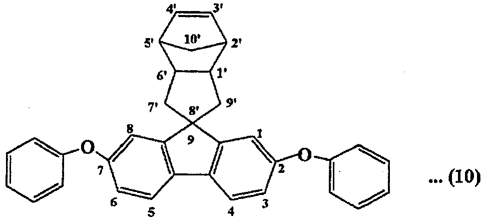
(10) spiro[2,7-diphenoxyfluorene-9,8'-tricyclo [4.3.0.1^{2.5}]dec-3-ene], 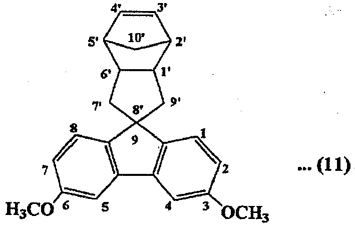
(11) spiro[3,6-dimethoxyfluorene-9,8'-tricyclo [4.3.0.1^{2.5}]dec-3-ene], 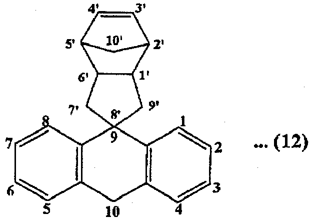
(12) spiro[9,10-dihydroanthracene-9,8'-tricyclo [4.3.0.1^{2.5}]dec-3-ene], 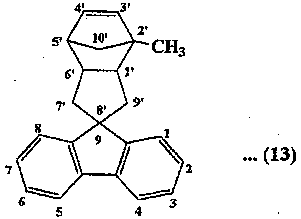
(13) spiro[fluorene-9,8'-[2]methyltricyclo[4.3.0.1^{2.5}] dec-3-ene], 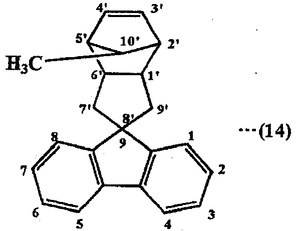
(14)spiro[fluorene-9,8'-[10]methyltricyclo[4.3.0.1^{2.5}] d ec-3-ene], 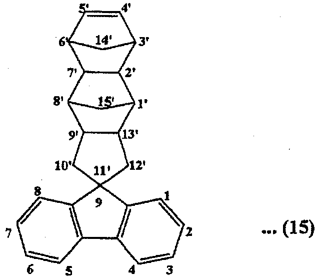
(15) spiro[fluorene-9,11'-pentacyclo [6.5.1.1^{3.6}.0^{2.7}.0^{9.13}] [4]pentadecene], 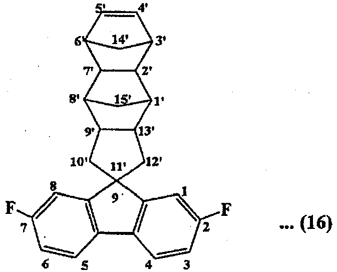
(16) spiro[2,7-difluorofluorene-9,11'-pentacyclo [6.5.1.1^{3.6}.0^{2.7}.0^{9.13}][4]pentadecene], 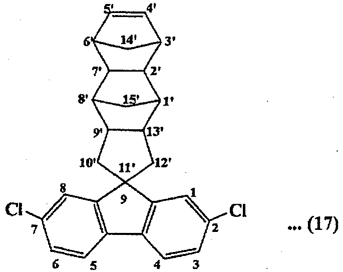
(17) spiro[2,7-dichlorofluorene-9,11'-pentacyclo [6.5.1.1^{3.6}.0^{2.7}.0^{9.13}] [4]pentadecene], 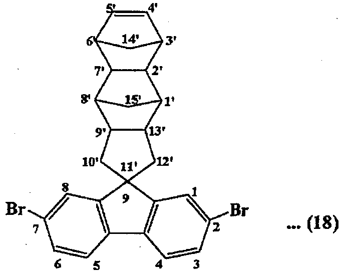
(18) spiro[2,7-dibromofluorene-9,11'-pentacyclo [6.5.1.1^{3.6}.0^{2.7}.0^{9.13}] [4]pentadecene], 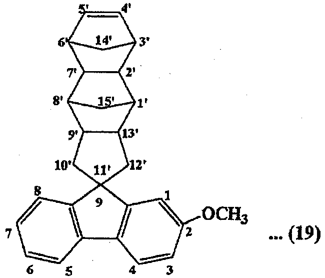
(19) spiro[2-methoxyfluorene-9,11'-pentacyclo [6.5.1.1^{3.6}.0^{2.7}.0^{9.13}] [4]pentadecene], 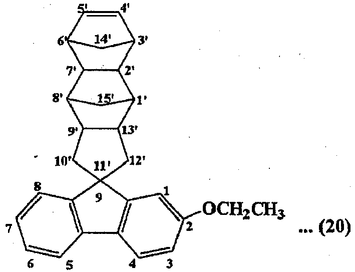
(20) spiro[2-ethoxyfluorene-9,11'-pentacyclo [6.5.1.1^{3.6}.0^{2.7}.0^{9.13}] [4]pentadecene], 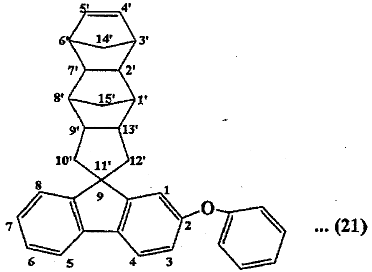
(21) spiro[2-phenoxyfluorene-9,11'-pentacyclo [6.5.1.1^{3.6}.0^{2.7}.0^{9.13}] [4]pentadecene], 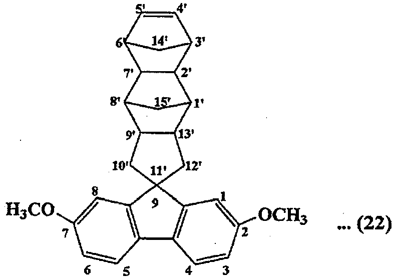
(22) spiro[2,7-dimethoxyfluorene-9,11'-pentacyclo [6.5.1.1^{3.6}.0^{2.7}.0^{9.13}][4]pentadecene], 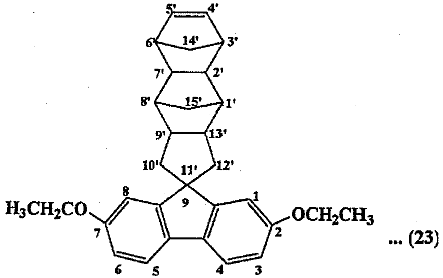
(23) spiro[2,7-diethoxyfluorene-9,11'-pentacyclo [6.5.1.1^{3.6}.0^{2.7}.0^{9.13}][4]pentadecene], 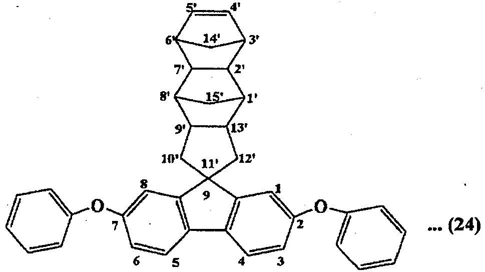
(24) spiro[2,7-diphenoxyfluorene-9,11'-pentacyclo [6.5.1.1^{3.6}.0^{2.7}.0^{9.13}][4]pentadecene], 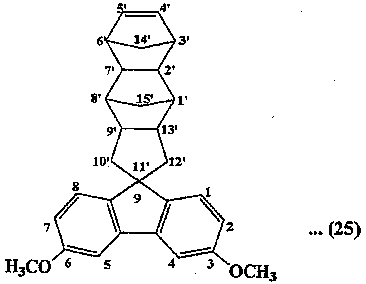
(25) spiro[3,6-dimethoxyfluorene-9,11'-pentacyclo [6.5.1.1^{3.6}.0^{2.7}.0^{9.13}] [4]pentadecene], 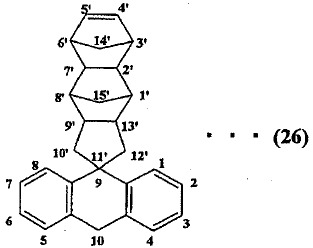
(26) spiro[9,10-dihydroanthracene-9,11'-pentacyclo [6.5.1.1^{3.6}.0^{2.7}.0^{9.13}][4]pentadecene], 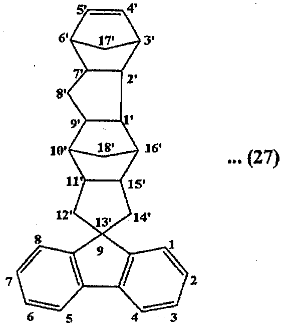
(27)spiro[fluorene-9,13'-hexacyclo[7.7.0.1^{3.6}.1^{10.16}.0^{2.7}. 0^{11.15}][4] octadecene], 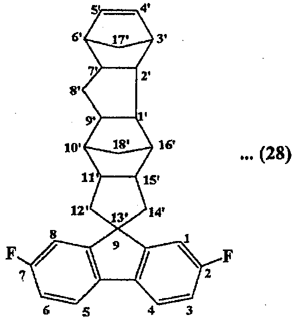
(28) spiro[2,7-difluorofluorene-9,13'-hexacyclo [7.7.0.1^{3.6}.1^{10.16}.0^{2.7}.0^{11.15}] [4]octadecene], 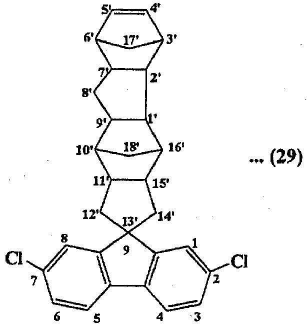
(29) spiro[2,7-dichlorofluorene-9,13'-hexacyclo [7.7.0.1³⁻⁶.1^{10.16}.0^{2.7}.0^{11.15}] [4]octadecene], 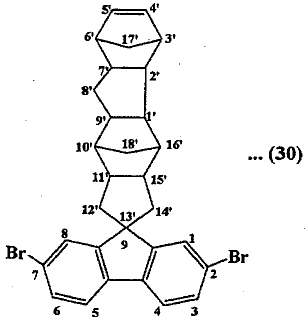
(30) spiro[2,7-dibromofluorene-9,13'-hexacyclo [7.7.0.1^{3.6}.1^{10.16}.0^{2.7}.0^{11.15}][4]octadecene], 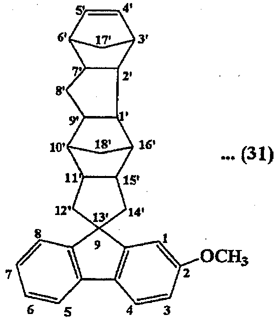
(31) spiro[2-methoxyfluorene-9,13'-hexacyclo [7.7.0.1^{3.6}.1^{10.16}.0^{2.7}.0^{11.15}][4]octadecene], 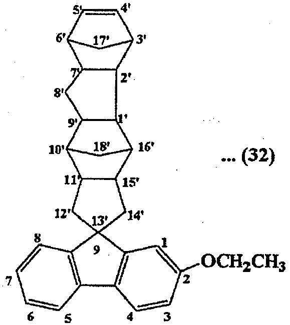
(32) spiro[2-ethoxyfluorene-9,13'-hexacyclo [7.7.0.1^{3.6}.1^{10.16}.0^{2.7}.0^{11.15}][4]octadecene], 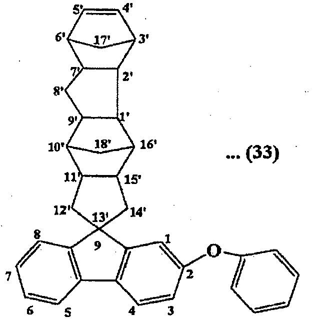
(33) spiro[2-phenoxyfluorene-9,13'-hexacyclo [7.7.0.1^{3.6}.1^{10.16}.0^{2.7}.0^{11.15}][4]octadecene], 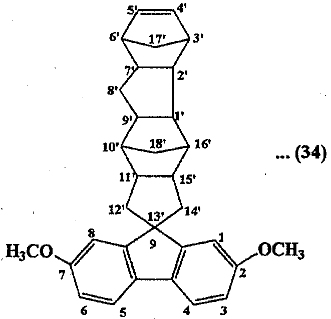
(34) spiro[2,7-dimethoxyflizorene-9,13'-hexacyclo [7.7.0.1^{3.6}.1^{10.16}.0^{2.7}.0^{11.15}][4]octadecene], 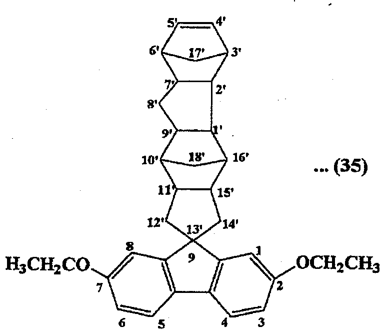
(35) spiro[2,7-diethoxyfluorene-9,13'-hexacyclo [7.7.0.1^{3.6}.1^{10.16}.0^{2.7}.0^{11.15}] [4]octadecene], 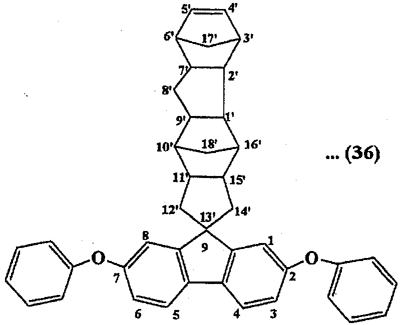
(36) spiro[2,7-diphenoxyfluorene-9,13'-hexacyclo [7.7.0.1^{3.6}.1^{10.16}.0^{2.7.}0.^{11.15}] [4] octadecene], 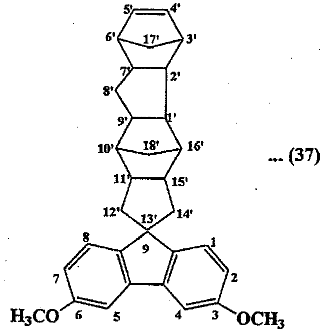
(37) spiro[3,6-dimethoxyfluorene-9,13'-hexacyclo [7.7.0.1^{3.6}.1^{10.16}.0^{2.7}.0^{11.15}] [4]octadecene], 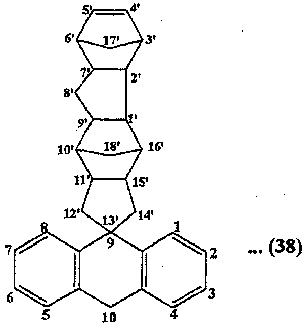
(38) spiro[9,10-dihydroanthracene-9,13'-hexacyclo [7.7.0.1^{3.6}.1^{10.16}.0^{2.7}.0^{11.1}5] [4]octadecene], and 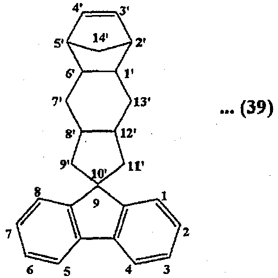
(39) spiro[fluorene-9,10'-tetracyclo[7.4.0.0^{8.12}.1^{2.5}] [3]t etradecene].

In the invention, as a monomer for obtaining a cycloolefin ring-opening polymer, the cycloolefin compounds (I) to (III) may be used singly or in a combination of two or more kinds of them. In addition, as the monomer composition for obtaining a cycloolefin ring-opening polymer, one or more kinds selected from the cycloolefin compounds (I) to (III) may be used in a combination with other cycloolefin compound having a norbornene structure or a copolymerizable monomer where necessary.

As the copolymerizable monomer, there may be mentioned, for example, a cycloolefin such as cyclobutene, cyclopentene, cyclooctene and cyclododecene; and a nonconjugated cyclic polyene such as 1,4-cyclooctadiene and cyclododecatriene. The copolymerizable monomer may be used singly or in a combination of two or more kinds of them.

In the invention, the type and mixing ratio of a monomer used for the ring-opening polymerization are selected accordingly depending on the characteristics required for the resulting resin and are not determined uniquely. However, typically it is preferable to select a monomer containing a cycloolefin compound having in the molecule a structure which contains at least one kind of atoms selected from oxygen atoms, nitrogen atoms, sulfur atoms or silicon atoms (hereinafter called a "polar structure") because it improves adhesiveness/affinity and printing properties of molded products using the resulting resin and dispersibility of other materials such as pigments. Needless to say, monomers having such polar structure may be used alone or in a combination with a monomer having no polar structure.

In the invention, it is preferable to use monomers containing a cycloolefin compound having a polar structure, among which, if there is used a compound in which at least one of R⁹ to R¹² in formula (I) is a group represented by formula (IV), it is more preferable because it provides an excellent balance between the heat resistance and water absorbing (hygroscopic) properties of the resulting hydrogenated product of a cycloolefin ring-opening polymer.

-(CH₂)_{z}COOR (IV)

In formula (IV), R represents a substituted or unsubstituted hydrocarbon group having 1 to 15 carbon atoms and z represents 0 or an integer of 1 to 10.

In formula (IV), the lower the value of z, the higher the glass transition temperature of the resulting hydrogenated product is, and thus it is preferable with respect to heat resistance. A monomer in which z is 0 is preferable with respect to ease of the synthesis. Further, R has a tendency to decrease the water absorbing (hygroscopic) properties of the resulting hydrogenated product of a cycloolefin ring-opening polymer as the number of carbon atoms is increased. However, since there is also a decreasing tendency of the glass transition temperature, R is preferably an alkyl group having 1 to 6 carbon atoms and especially preferably a methyl group.

Further, in formula (I), there is suitably used a monomer having only one group represented by formula (IV) because it is easily synthesized and easily available industrially. In addition, in formula (I), if an alkyl group having 1 to 5 carbon atoms, especially a methyl group is bonded to a carbon atom to which a group represented by formula (IV) is bonded, it is preferable with respect to the balance between heat resistance and water absorbing (hygroscopic) properties. Furthermore, in formula (I), there is suitably used a monomer in which i is 1 and j is 0 because it may produce a hydrogenated product of a cycloolefin ring-opening polymer having a high heat resistance and is easily available industrially.

A cycloolefin ring-opening polymer used in the invention is obtained by ring-opening (co)polymerizing the monomer containing a cycloolefin compound.

### - Polymerization Temperature

In the invention, a monomer containing at least one kind of cycloolefin compounds represented by formulas (I) to (III) is ring-opening polymerized or ring-opening copolymerized in the presence of a polymerization catalyst. In such polymerization, the timing of adding a polymerization catalyst is an important technical requirement. In other words, a polymerization catalyst is preferably added at the time when the temperature of a monomer solution containing a monomer and a solvent is 90 to 140°C and preferably 90 to 120°C. If the polymerization reaction is carried out in this temperature range, the reactivity ratio of a monomer is close and a copolymer having an excellent randomness is preferably obtained. It is considered that it is possible to suppress the formation of a multi-branched polymer and a microgel which are the origins of a gel by adding a polymerization catalyst in such temperature range. Such effect is remarkable especially in the case of using a cycloolefin monomer having two or more olefinic unsaturated bonds in the molecule, for example, a DCP-based monomer.

### - Polymerization Catalyst

As the catalyst used for the ring-opening (co) polymerization, a known metathesis catalyst may be used, but, for example, there is preferably used a catalyst described in Olefin Metathesis and Metathesis Polymerization (K.J.IVIN, J.C.MOL, Academic Press 1997).

As such catalyst, there may be mentioned, for example, a metathesis polymerization catalyst composed of a combination of (a) at least one kind selected from compounds of elements W, Mo, Re, V and Ti and (b) at least one kind selected from compounds which are compounds of elements Li, Na, K, Mg, Ca, Zn, Cd, Hg, B, Al, Si, Sn, Pb, Ti, Zr and the like and have at least one bond between the above element and carbon or between the above element and hydrogen. This catalyst may be a catalyst to which an additive (c) to be described later is added in order to increase the catalyst activity. In addition, as other catalysts, there may be mentioned (d) a metathesis catalyst composed of a transition metal of Groups 4 to 8 of the periodic table and a carbene complex, a metalacyclobutene complex and the like without using any co-catalyst.

As the representative examples of an appropriate compound of W, Mo, Re, V and Ti as the (a) components, there may be mentioned the compounds described in Japanese Patent Laid-Open Publication H1-240517 such as WCl₆, MoCl₅, ReOCl₃, VOCl₃ and TiCl₄.

As the (b) components, there may be mentioned the compounds described in Japanese Patent Laid-Open Publication H1-240517 such as n-C₄H₉Li, (C₂H₅)₃Al, (C₂H₅)₂AlCl, (C₂H₅)_{1.5}AlCl_{1.5}, (C₂H₅)AlCl₂, methylalmoxane and LiH.

As the representative examples of (c) components which are additives, there may be preferably used alcohols, aldehydes, ketones, amines and the like. In addition, there may be used the compounds described in Japanese Patent Laid-Open Publication H1-240517.

As the representative examples of the catalyst (d), there may be mentioned W (=N-2, 6-C₆H₃ iPr₂) (=CH tBu) (O tBu)₂, Mo (=N-2, 6-C₆H₃ iPr₂) (=CH tBu) (O tBu)₂, Ru(=CHCH=CPh₂) (PPh₃)₂Cl₂, Ru(=CHPh) (PC₆H₁₁)₂Cl₂ and the like.

As the amount of a metathesis catalyst used, in terms of the molar ratio of the (a) component to a monomer (the total amount of monomers used for the ring-opening (co)polymerization), "(a) component : the monomer" is in a range of typically 1:500 to 1:500000, and preferably 1:1000 to 1:100000. The ratio of (a) component to (b) component is, in terms of a metal atom ratio, "(a) : (b)" in a range of 1:1 to 1:50, and preferably 1:2 to 1:30. Further, the ratio of (a) component to (c) component is, in terms of a molar ratio, "(c) : (a)" in a range of 0.005:1 to 15:1, and preferably 0.05:1 to 7:1. Furthermore, the amount of catalyst (d) used is, in terms of the molar ratio of (d) component to a monomer, "(d) component: the monomer" in a range of typically 1:50 to 1:50000, and preferably 1:100 to 1: 10000.

### - Molecular Weight of Cycloolefin Ring-Opening Polymer

The molecular weight of a cycloolefin ring-opening polymer is preferably adjusted so that it is a desired molecular weight depending on the applications of a hydrogenated product of a cycloolefin ring-opening polymer to be produced. Therefore, the molecular weight is not specified uniquely, but the intrinsic viscosity (ηᵢₙₕ) is typically 0.2 to 5.0, and preferably 0.4 to 1.5. As the molecular weight converted to standard polystyrene equivalent as measured by gel permeation chromatography (GPC), the weight average molecular weight (Mw) is typically 10×10³ to 1.0×10⁶, and preferably 5.0×10³ to 5.0×10⁵, and the molecular weight distribution (Mw/Mn) is typically 1 to 10, preferably 1 to 5 and more preferably 1 to 4. If the molecular weight of a ring-opening polymer is too high, the efficiency of the hydrogenation reaction may sometimes decreases, thereby causing a problem that the hydrogenation rate of the resulting hydrogenated product of a cycloolefin ring-opening polymer may not reach a desired value or the reaction time is extended.

The molecular weight of a cycloolefin ring-opening polymer may be adjusted by selecting the polymerization temperature, type of a catalyst and type of a solvent, but, in the invention, it is preferably adjusted by allowing a molecular weight adjusting agent to coexist in the reaction system. As the suitable molecular weight adjusting agent, there may be mentioned, for example, α-olefins such as ethylene, propylene, 1-butene, 1-pentene, 1-hexene, 1-heptene, 1-octene, 1-nonene and 1-decene and styrene, among which especially preferable are 1-butene and 1-hexene. These molecular weight adjusting agents may be used alone or in a combination of two or more kinds. The amount of a molecular weight adjusting agent used is 0.001 to 0.6 mol, and preferably 0.02 to 0.5 mol, based on 1 mol of a monomer used for the ring-opening (co)polymerization.

### - Polymerization Reaction Solvent

As a solvent used in the ring-opening (co)polymerization, that is, as a solvent which dissolves a norbornene based monomer, a metathesis catalyst and a molecular weight adjusting agent, there is preferably used the following solvent I and solvent II or a mixture of these solvents.

The solvent I is composed of a mixed solvent of a solvent component (1) and a solvent component (2).

As the solvent component (1), there is used an alicyclic saturated hydrocarbon and/or an aliphatic saturated hydrocarbon having 10 carbon atoms or less, preferably 5 to 8 carbon atoms. As the specific example of the alicyclic saturated hydrocarbon, there may be mentioned cyclopentane, methylcyclopentane, cyclohexane, methylcyclohexane, dimethylcyclohexane, ethylcyclohexane, cycloheptane, decalin and the like. In addition, as the specific example of the aliphatic saturated hydrocarbon, there may be mentioned n-pentane, isopentane, n-hexane, n-heptane, n-octane and the like.

As the solvent component (2), dialkylglycol ether is used. The specific example includes ethyleneglycol dimethyl ether, ethyleneglycol diethyl ether, ethyleneglycol dibutyl ether, diethyleneglycol dimethyl ether, diethyleneglycol diethyl ether, diethyleneglycol dibutyl ether, triethyleneglycol dimethyl ether and the like.

The mixing ratio of the solvent component (1) and solvent component (2) in the solvent I is typically 95:5 to 30:70, and preferably 90:10 to 40: 60 in terms of a weight ratio. If the ratio of the solvent component (1) is excessive, the solubility of the solvent I to the resulting polymer is insufficient, while if the ratio is too small, the reactivity of the polymerization reaction is low, sometimes making it unable to obtain a polymer having a high degree of polymerization.

In addition, the solvent II includes, for example, an aromatic hydrocarbon having 6 to 10 carbon atoms such as benzene, toluene, xylene and ethylbenzene; alkanes such as pentane, hexane, heptane, nonane and decane; cycloalkanes such as cyclohexane, cycloheptane, cyclooctane, decalin and norbornane; a halogenated alkane or aryl compounds such as chlorobutane, bromohexane, methylene chloride, dichloroethane, hexamethylene dibromide, chlorobenzene, chloroform and tetrachloroethylene; saturated carboxylic acid esters such as ethyl acetate and methyl propionate; and the like. These solvents may be used alone or in a combination of two or more kinds.

In the polymerization reaction carried out using the solvents, the ratio of the total monomer to the solvent is in a range of "the monomer : the solvent" of typically 5:1 to 1:15, preferably 2:1 to 1:8, and more preferably 1:1 to 1:6 in terms of a weight ratio.

The cycloolefin ring-opening polymer thus obtained has carbon-carbon double bonds in the main chain.

### Hydrogenation Reaction

In a hydrogenation method of a cycloolefin ring-opening polymer of the invention, the hydrogenation reaction of a cycloolefin ring-opening polymer is carried out in the presence of the metal hydride complex of the invention.

In the hydrogenation reaction, the olefinic unsaturated group represented by formula: -CH=CH- present in the main chain of a cycloolefin ring-opening polymer is hydrogenated and converted to a group represented by formula: -CH₂-CH₂-. If a cycloolefin ring-opening polymer has an unsaturated bond outside the main chain such as inside the ring structure, the unsaturated bond outside the main chain may not be hydrogenated.

Meanwhile, the hydrogenation rate of a cycloolefin ring-opening polymer in the hydrogenation method of the invention (the ratio that the carbon-carbon double bonds present in the main chain of a cycloolefin ring-opening polymer are hydrogenated) is typically 40 mol% or more, preferably 60 mol% or more, more preferably 90 mol% or more and furthermore preferably 95 mol% or more. The higher the hydrogenation rate, the more preferable it is since the occurrence of coloration and deterioration of the resulting hydrogenated product under a high temperature condition is suppressed and toughness is imparted to the molded article obtained from the hydrogenated product.

The hydrogenation reaction may be carried out, for example, by adding a metal hydride complex of the invention as a catalyst to a solution of a cycloolefin ring-opening polymer and then adding hydrogen gas typically at normal pressure to 30 MPa, preferably at 3 to 20 MPa thereto,followed by carrying out the reaction typically at 0 to 220°C and preferably at 20 to 200°C. A metal hydride complex may be added in any state, for example, in a powdered state, in a solution state or in a slurry state, and it is preferable to add as a metal hydride complex solution. As the metal hydride complex solution, preferably used is a solution in which a metal hydride complex is dissolved in an organic solvent such as benzene, toluene, xylene, cyclohexane, and methylcyclohexane so that the concentration is 0.2 % by weight or more and preferably 1.0 % by weight or more. Further, when the hydrogenation is carried out following the polymerization of a cycloolefin ring-opening polymer, preferably used is a solvent used in the polymerization or a solvent having compatibility with it as a solvent of the metal hydride complex solution.

In the invention, a metal hydride complex is preferably used in a range of "the metal hydride complex : the ring-opening polymer" of typically 1:1×10⁻⁶ to 1:1×10⁻² in terms of a weight ratio.

There may be added various additives such as an antioxidant, an ultraviolet absorber, and a lubricant to a hydrogenated product of a cycloolefin ring-opening polymer obtained by a production method of the invention, where necessary.

As such additives, there may be mentioned, for example, a phenol-based or hydroquinone-based antioxidant such as 2,6-di-t-butyl-4-methylphenol, 2,2'-methylenebis(4-ethyl-6-t-butylphenol), 2,5-di-t-butylhydroquinone, pentaerythritol tetrakis[3-(3,5-di-t-butyl-4-hydroxyphenyl)propionate], 4,4'-thiobis(6-t-butyl-3-methylphenol), 1,1-bis(4-hydroxyphenyl)cyclohexane, octadecyl 3-(3,5-di-t-butyl-4-hydroxyphenyl)propionate and 3,3',3",5,5',5"-hexa-t-butyl-a,a',a"-(mesitylene-2,4,6-triyl) tri-p-cresol; and a phosphorus-based antioxidant such as tris(4-methoxy-3,5-diphenyl)phosphite, tris(nonylphenyl) phosphite and tris(2,4-di-t-butylphenyl)phosphite. The oxidation degradation resistance of a ring-opening (co)polymer may be improved by adding one or two or more kinds of these antioxidants.

In addition, the light resistance may be improved, for example, by the addition of an ultraviolet absorber such as 2,4-hydroxybenzophenone, 2-hydroxy-4-methoxybenzophenone, 2,2'-methylenebis[4-(1,1,3,3-tetramethylbutyl)-6-[(2H-benzo triazol-2-yl)phenol]].

Further, in addition to a lubricant used for improving processability, there may be added a known additive such as fire retardant, antibacterial agent, petroleum resin, plasticizer, coloring agent, mold lubricant and foaming agent. These additives may be used singly or in a combination of two or more kinds of them.

A hydrogenated product of a cycloolefin ring-opening polymer obtained in the invention may be molded appropriately and especially suitably used in the application to the field of optical components, electric and electronic materials and the like. As the specific examples of such applications, there may be mentioned optical disk, magneto optical disk, optical lens (Fθ lens, pickup lens, lens for a laser printer, lens for a camera), lens for eyewear, optical film (film for display, phase difference film, polarizing film, transparent conductive film, wavelength plate, antireflection film, optical pickup film and the like), optical sheet, optical fiber, optical waveguide, light diffusion plate, optical card, optical mirror, IC-, LSI-, LED-sealant, and the like.

According to the invention, there may be provided a new hydrogenated product of a cycloolefin ring-opening (co)polymer useful as a precursor monomer for producing a cycloolefin polymer which exhibits excellent transparency, heat resistance and low water-absorbing properties and freely controls the birefringence and wavelength dispersion properties by appropriately adjusting the composition.

### <Production Method of Hydrogenated Product of Cycloolefin Ring-Opening Polymer>

A method for producing a hydrogenated product of a cycloolefin ring-opening polymer of the invention is an especially preferred embodiment among the hydrogenation methods of the cycloolefin ring-opening polymer, and the hydrogenation of the cycloolefin ring-opening polymer is carried out in the presence of the metal hydride complex of the invention after adjusting the temperature to a relatively low temperature. By so doing, the maximum attained temperature of the hydrogenation reaction decreases, and the productivity is significantly improved and the formation of gel component including a microgel is remarkably suppressed.

### Cycloolefin Ring-opening Polymer

A cycloolefin polymer used for a production method of the invention may be obtained by ring-opening polymerizing a monomer containing the compound (II). Among the compounds (II), especially preferably used is tricyclo [4.3.0.1^{2,5}]deca-3,8- diene (DCP) which is readily available industrially and inexpensive. Further, these compounds may be used singly or in a combination of two or more kinds of them. In addition, preferable is a polymer obtained by ring-opening polymerizing a monomer containing the compounds (I) and/or (III) together with the compound (II). Further, in addition to these, there may be used a monomer containing the above-mentioned other copolymerizable compound.

The methods and conditions of a ring-opening polymerization reaction, as well as the catalyst, solvent and the like used for the ring-opening polymerization reaction are same as those mentioned above. The olefinic unsaturated bonds of the resulting cycloolefin ring-opening polymer are hydrogenated in the presence of a hydrogenation catalyst.

### Hydrogenation catalyst

A hydrogenation catalyst used for a production method of the invention is the metal hydride complex of the invention. The amount of the metal hydride complex used is 5 to 200 ppm and preferably 10 to 100 ppm in terms of the amount of metal/the amount of charged monomer. If the charged amount is less than 5 ppm, sufficient hydrogenation reaction may not sometimes proceed, and if the charged amount exceeds 200 ppm, catalyst removal is likely to become difficult. Incidentally, regarding the timing of adding the hydrogenation catalyst, the catalyst may have been added to a ring-opening polymer solution before the temperature adjustment or may be added during the temperature adjustment.

### Solvent for Hydrogenation Reaction

A solvent used for the hydrogenation reaction is not particularly limited if it is a good solvent for a cycloolefin ring-opening polymer to be hydrogenated and the solvent itself is not hydrogenated. Specifically, there may be mentioned the same solvent as the above-mentioned solvent for polymerization reaction. For this reason, it is also preferable to directly use a cycloolefin ring-opening polymer solution obtained in the polymerization of a monomer for the hydrogenation reaction. The weight ratio of a cycloolefin ring-opening polymer in a solution used for the hydrogenation reaction to a solvent is typically 5:1 to 1:20, preferably 2:1 to 1:15 and more preferably 1:1 to 1:10.

### Hydrogenation Reaction

In a production method of the invention, it is important to carry out the hydrogenation reaction by contacting a solution of a cycloolefin ring-opening polymer with hydrogen after adjusting the temperature of the solution to 40°C or more and less than 120°C. In general, in the hydrogenation of a cycloolefin ring-opening polymer, the hydrogenation reaction is carried out by adding a hydrogenation catalyst and hydrogen to a solution in which a ring-opening polymer is dissolved in a suitable solvent. However, in the production method of the invention, the timing of contacting the ring-opening polymer with hydrogen is an important technical requirement.

In a production method of the invention, it is preferable to start the contact of a solution of a cycloolefin ring-opening polymer with hydrogen by adding hydrogen at the time when the solution containing the ring-opening polymer is heated where necessary and the temperature of the solution containing the ring-opening polymer is adjusted to 40°C or more and less than 120°C, preferably 70°C or more and less than 120°C and more preferably 80 to 110°C. If hydrogen is added in a state where the temperature of solution containing the ring-opening polymer is less than 40°C, the hydrogenation reaction takes a long time due to the low rate of the hydrogenation reaction and the formation of a microgel may not sometimes be suppressed. In addition, if the polymer solution temperature is too high at the time of the hydrogenation reaction, the hydrogenation catalyst may be deactivated or the polymer may be decomposed to a low molecular weight compound by the thermal decomposition.

The pressure of the reaction system in the hydrogenation reaction is typically 50 to 220 kg/cm², preferably 70 to 150 kg/cm² and more preferably 90 to 120 kg/cm². If the pressure is too low, it takes a long time for the hydrogenation reaction and the problem with productivity may happen, and on the other hand, if the pressure is too high, a large reaction rate can be obtained, but as an equipment an expensive pressure-resistant equipment is required, which is not economical.

The hydrogenation reaction meant in the invention is the hydrogenation to olefinic unsaturated bonds in the molecule of a cycloolefin ring-opening polymer and unsaturated bonds other than those described above may not be hydrogenated. For example, when the polymer has an aromatic group, the aromatic group may not necessarily be hydrogenated. Since the presence of an aromatic group in the molecule may be beneficial to the heat resistance or optical properties such as refractive index of the resulting hydrogenated product of a cycloolefin ring-opening polymer, it may be preferable to select conditions under which the aromatic group is not substantially hydrogenated, depending on the desired properties. Further, when an aromatic solvent such as toluene is used as a solvent, it goes without saying that the conditions under which the solvent is not hydrogenated are preferable.

### Antioxidant

In a production method of the invention, in order to further suppress the formation of a gel at the time of the hydrogenation reaction, the hydrogenation of a cycloolefin ring-opening polymer may be carried out in the presence of a known antioxidant.

In the invention, as an antioxidant which may be preferably used, there may be mentioned an antioxidant selected from the group consisting of phenol-based compounds, thiol-based compounds, sulfide-based compounds, disulfide-based compounds and phosphorus-based compounds, and these antioxidants may be used singly or in a combination of two or more kinds of them. As the specific examples of these compounds which may be used as an antioxidant in the invention, there may be mentioned compounds shown below.

### - Phenol-Based Compound

As the phenol-based compound, there may be mentioned triethylene glycol-bis[3-(3-t-butyl-5-methyl-4-hydroxyphenyl) propionate], 1,6-hexanediol-bis[3-(3,5-di-tert-butyl-4-hydroxyphenyl) propionate], 2,4-bis-(n-octylthio)-6-(4-hydroxy-3,5-di-t-butylanilino)-3,5-triazine, pentaerythrithyl-tetrakis[3-(3,5-di-t-butyl-4-hydroxyphenyl) propionate], 2,2-thio-diethylenebis[3-(3,5-di-t-butyl-4-hydroxyphenyl) propionate], octadecyl-3-(3,5-di-t-butyl-4-hydroxyphenyl)propionate], N,N-hexamethylenebis(3,5-dit-butyl-4-hydroxy-hydrocynnamamide), 1,3,5-trimethyl-2,4,6-tris(3,5-di-t-butyl-4-hydroxybenzyl) benzene, tris-(3,5-di-t-butyl-4-hydroxybenzyl)isocyanurate, 3,9-bis [2-[3-(3-t-butyl-4-hydroxy-5-methylphenyl)propionyloxy]-1,1-d imethylethyl]-2,4,8,10-tetraoxaspiro[5.5]undecane and the like. Preferably, there may be mentioned octadecyl-3-(3,5-di-t-butyl-4-hydroxyphenyl)propionate], l,3,5-trimethyl-2,4,6-tris(3,5-di-t-butyl-4-hydroxybenzyl) benzene and pentaerythrithyltetrakis[3-(3,5-di-t-butyl-4-hydroxyphenyl)propionate], and octadecyl-3-(3,5-di-t-butyl-4-hydroxyphenyl)propionate] is especially preferably mentioned.

### - Thiol-Based Compound

As the thiol-based compound, there may be mentioned an alkylmercaptans such as t-dodecylmercaptan and hexylmercaptan, 2-mercaptobenzimidazole, 2-mercapto-6-methylbenzimidazole, 1-methyl-2-(methylmercapto)benzimidazole, 2-mercapto-1-methylbenzimidazole, 2-mercapto-4-methylbenzimidazole, 2-mercapto-5-methylbenzimidazole, 2-mercapto-5,6-dimethylbenzimidazole, 2-(methylmercapto)benzimidazole, 1-methyl-2-(methylmercapto)benzimidazole, 2-mercapto-1,3-dimethylbenzimidazole, mercaptoacetic acid and the like.

### - Sulfide-Based Compound

As the sulfide-based compound, there may be mentioned 2,2-thio-diethylenebis[3-(3,5-di-t-butyl-4-hydroxyphenyl) propionate], 2,2-thiobis(4-methyl-6-t-buylphenol), 2,4-bis(n-octylthiomethyl)-6-methylphenol, dilauryl 3,3'-thiodipropionate, dimyristyl 3,3'-thiodipropionate, distearyl 3,3'-thiodipropionate, pentaerythrityltetrakis(3-laurylthiopropionate), ditridecyl 3,3'-thiodipropionate and the like.

### - Disulfide-Based Compound

As the disulfide-based compound, there may be mentioned bis(4-chlorophenyl)disulfide, bis(2-chlorophenyl)disulfide, bis(2,5-dichlorophenyl)disulfide, bis(2,4,6-trichlorophenyl)disulfide, bis(2-nitrophenyl)disulfide, ethyl 2,2'-dithiodibenzoate, bis(4-acetylphenyl)disulfide, bis(4-carbomoylphenyl)disulfide, 1,1'-dinaphthyldisulfie, 2,2'-dinaphthyldisulfide, 1,2'-dinaphthyldisulfide, 2,2'-bis(1-chlorodinaphthyl)disulfide, 1,1'-bis(2-chloronaphthyl)disulfide, 2,2'-bis(1-cyanonaphthyl)disulfide, 2,2'-bis(1-acetylnaphthyl)disulfide, dilauryl-3,3'-thiodipropionic acid ester and the like.

### Phosphorus-Based Compound

As the phosphorus-based compound, there may be mentioned tris(4-methoxy-3,5-diphenyl)phosphite, tris(nonylphenyl)phosphite, tris(2,4-di-t-butylphenyl)phosphite, bis(2,6-di-t-butyl-4-methylpheyl)pentaerythritol diphosphite, bis(2,4-di-t-butylphenyl)pentaerythritol diphosphite and the like.

In a production method of the invention, the hydrogenation reaction of a cycloolefin ring-opening polymer is preferably carried out in the presence of 0.01 to 10 parts by weight of such antioxidant, based on 100 parts by weight of a ring-opening polymer. In other words, the hydrogenation reaction may be carried out by adding 0.01 to 10 parts by weight of at least one kind of the compound selected from the group consisting of the above-mentioned compounds to a solution of a cycloolefin ring-opening polymer, based on 100 parts by weight of the ring-opening polymer. Especially preferable is a phenol-based compound and gelation may be suppressed by the addition of a small amount of the compound without reducing the hydrogenation rate.

According to such production method of a hydrogenated product of a cycloolefin ring-opening polymer of the invention, the formation of the gel component may be significantly suppressed compared with the case in which a hydrogenated product of a cycloolefin ring-opening polymer is produced by a conventionally known method, thereby enabling producing a hydrogenated product of a cycloolefin ring-opening polymer in which the formation of the gel component is reduced without substantially containing the gel component.

The hydrogenated product of a cycloolefin ring-opening polymer thus obtained may be used by concentrating to remove the solvent by a known method where necessary. Further, a known additive may be added to the resulting hydrogenated product of a cycloolefin ring-opening polymer where necessary.

Since a hydrogenated product of a cycloolefin ring-opening polymer obtained by a production method of the invention contains substantially no gel component and also substantially no microgels which are difficult to remove by filtration and the like, it is excellent in homogeneity of resin and strain is unlikely to occur when a molded article is produced.

In a production method of a hydrogenated product of a cycloolefin ring-opening polymer of the invention, the formation of a so-called microgel with less than submicrometer size may be suppressed, thereby resulting in a good productivity of the filtration process in which the resulting hydrogenated product of a cycloolefin ring-opening polymer is filtered.

In the resulting hydrogenated product of a cycloolefin ring-opening polymer before the filtration process in the invention, when three filters with an average pore size of 2.0 µm and a filtration area of 2000 cm², with an average pore size of 1.0 µm and a filtration area of 2000 cm² and with an average pore size of 0.2 µm and a filtration area of 1800 cm² are connected serially in the order of decreasing filter pore size and a purified polymer solution having the solid component concentration of 20 % by weight is continuously filtered at 50°C under a nitrogen pressure of 3.0 kgf/cm², the ratio of the filtration rate after one hour to the filtration rate after 1000 hours from the start of filtration satisfies preferably 0.85 to 1.00. Such hydrogenated product of a cycloolefin ring-opening polymer contains substantially no gel component and the productivity of the filtration process is excellent. If the ratio is less than 0.85, there may occur problems that a filter is clogged in a short period of time to stop a production line, frequent filter replacement is required or a foreign material may not be removed because the filter is broken.

A hydrogenated product of a cycloolefin polymer obtained by a production method of the invention may be used by molding to a desired shape by a known method and the resulting molded article is excellent in optical properties and reduces localization of strength because gel component is not substantially present in the resin. For this reason, the hydrogenated product of a cycloolefin polymer of the invention, as mentioned above, may be used in the application to various molded articles such as a film or sheet, including optical components and electric and electronic materials.

### EXAMPLES

Hereinafter, the invention will be explained in more detail based on Examples, but the invention is not limited to these Examples.

Meanwhile, in the following Examples, RuHCl (CO) (PPh₃)₃ used as a raw material was synthesized in accordance with the literature [N., Ahmad, et al., Inorg. Synth., 15, 45 (1974)] . Further, there were used potassium hydroxide, n-butanol, methanol, benzoic acid and the like manufactured by Wako Pure Chemical Industries, Ltd. after reducing dissolved oxygen, moisture and the like by nitrogen bubbling. In addition, the identification of the resulting complexes was performed with the following analytical instruments.
(1) ¹H-NMR, ³¹P-NMR:
   Measurement was performed by using "AVANCE500" manufactured by BRUKER with chloroform-d as a solvent.
(2) IR:
   Measurement was performed by using "FT/IR-480 Plus" manufactured by JASCO Corporation.

In addition, various physical properties were measured or evaluated as follows.

### <Glass Transition Temperature (Tg)>

The measurement was made at a heating rate of 20°C/min under a nitrogen flow by using DCS6200 manufactured by Seiko Instruments Inc.

### <Hydrogenation Rate>

¹H-NMR was measured by using AVANCE500 manufactured by BRUKER as a nuclear magnetic resonance spectrometer (NMR) with chloroform-d as a measuring solvent. The composition of a monomer was calculated from the integral value of the vinylene group at 5.1 to 5.8 ppm, the methoxy group at 3.7 ppm and the aliphatic proton at 0.6 to 2.8 ppm, and then the hydrogenation rate was calculated.

### <Intrinsic Viscosity (ηᵢₙₕ)>

A chlorobenzene solution having a concentration of 0.5 g/100 ml was prepared and the measurement was made under the condition of 30°C.

### <Molecular Weight>

The weight average molecular weight (Mw) converted to polystyrene equivalent and the molecular weight distribution (Mw/Mn) were measured by using tetrahydrofuran (THF) as a solvent and HLC-8020 Gel Permeation Chromatography (GPC) manufactured by Tosoh Corporation. Mn represents a number average molecular weight.

### <Filtration Rate Measurement>

A polymer solution after hydrogenation was purified, and then the resulting polymer solution was continuously filtered at room temperature under a nitrogen pressure of 3.0 kgf/cm² through Compact Cartridge Filter: MCP-HX-E10S (average pore size: 2. 0 µm, filtration area: 2000cm²), MCP-JX-E10S (average pore size: 1.0 µm, filtration area: 2000cm²) and MCS-020-E10SR (average pore size: 0.2 µm, filtration area: 1800cm²) manufactured by Advantec Co., Ltd., each of which was connected in series in this order, and the change with time of the filtration rate was measured. Further, Compact Cartridge Housing: MTA-2000T was used for these filters.

### [EXAMPLE 1]

### <Synthesis of RuH(OCOPh) (CO) (PPh₃)₂>

To 18.0 g (18.9 mmol) of RuHCl(CO) (PPh₃)₃ was added 210 mL of a n-butanol solution of potassium hydroxide (7.42 g, 132.3 mmol) under a nitrogen atmosphere, followed by heating under reflux at 125°C for one hour. The solubility of RuHCl (CO) (PPh₃)₃ used here to toluene at 20°C was 0.03 % by weight.

Subsequently, 73 mL of a n-butanol solution of benzoic acid (23.1 g, 189.0 mmol) was added to the reaction solution, and the resultant mixture was heated under reflux for one hour to precipitate a pale yellow powdery product. After the reaction solution was cooled to room temperature, the solid powder was washed with 100 mL of cold methanol (0°C) and the resulting solid was filtered off from the supernatant. The solid was further washed with 50 mL of water and 200 mL of cold methanol (0°C), followed by drying under reduced pressure to obtain the target product (13.9 g, 18.0 mmol, yield 95%).

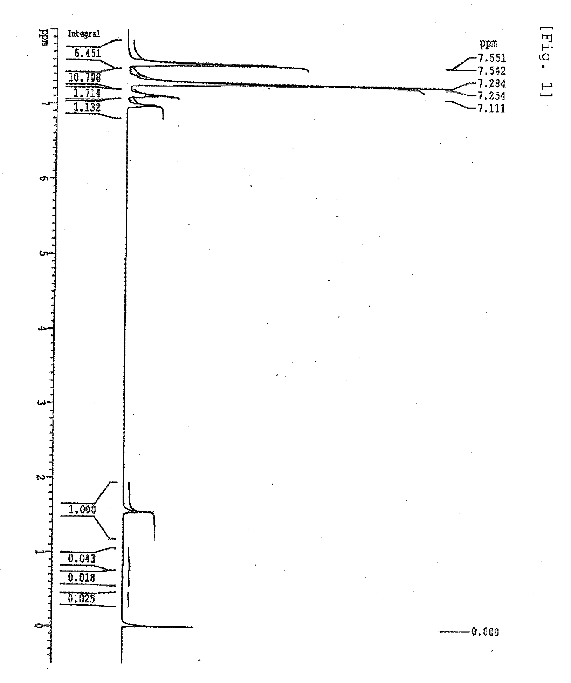

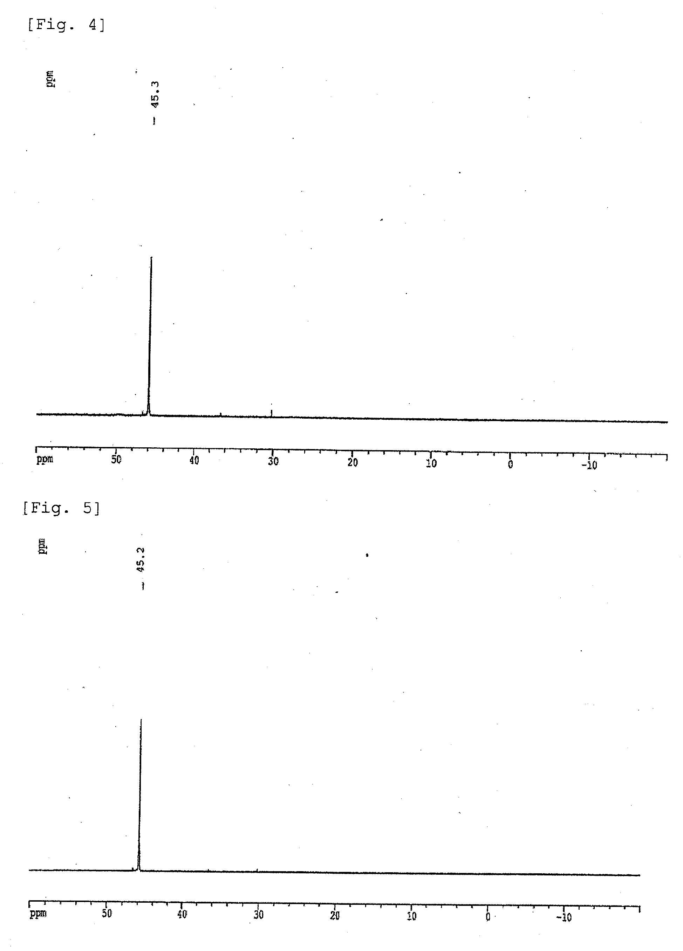

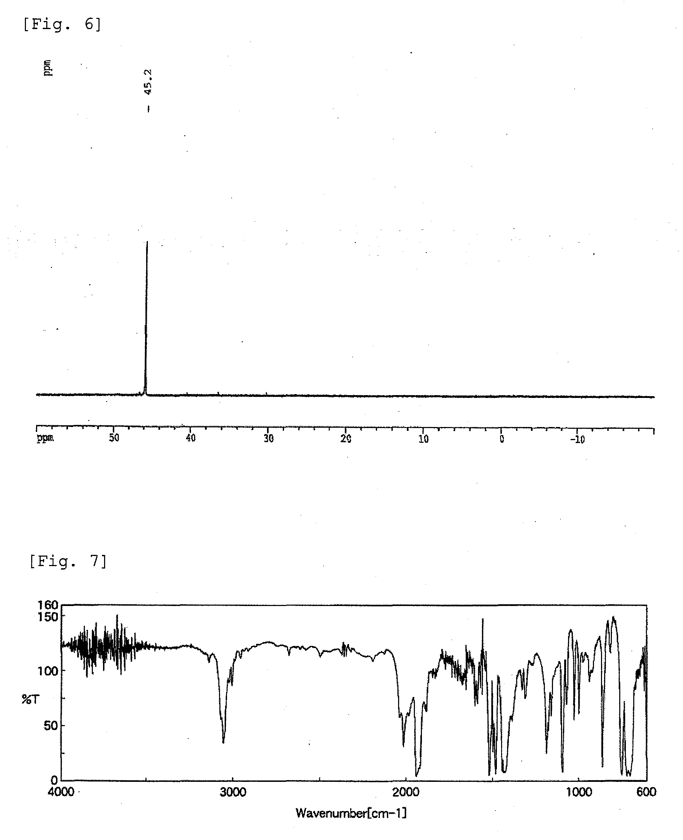

The results of a ¹H-NMR analysis of the obtained product showed that the integral ratio of the region of the unsaturated hydrocarbons on the aromatic group bonded to carboxylic acid at 7.0 to 7.1 ppm to the region of unsaturated hydrocarbons of triphenylphosphine at 7.2 to 7. 6 ppm was 5:30, which agreed well with a theoretical value. In addition, from the results of a ³¹P-NMR analysis, a singlet peak of triphenylphosphine was detected at 45.3 ppm. In addition, from the measurements of IR, absorptions were observed at 2011 cm⁻¹ (Ru-H), 1938 cm⁻¹ (CO) and 1520 cm⁻¹ (metal coordinated carboxylic acid residues), and it was confirmed that the target compound RuH(OCOPh) (CO) (PPh₃)₂ was formed. The ¹H-NMR spectrum of the ruthenium hydride complex is shown in Figure 1, its ³¹P-NMR spectrum in Figure 4 and its IR spectrum in Figure 7. Further, the solubility of the ruthenium hydride complex to toluene at 20°C was 0.5 % by weight.

### [EXAMPLE 2]

### <Synthesis of RuH(OCOPh-C₅H₁₁) (CO) (PPh₃)₂>

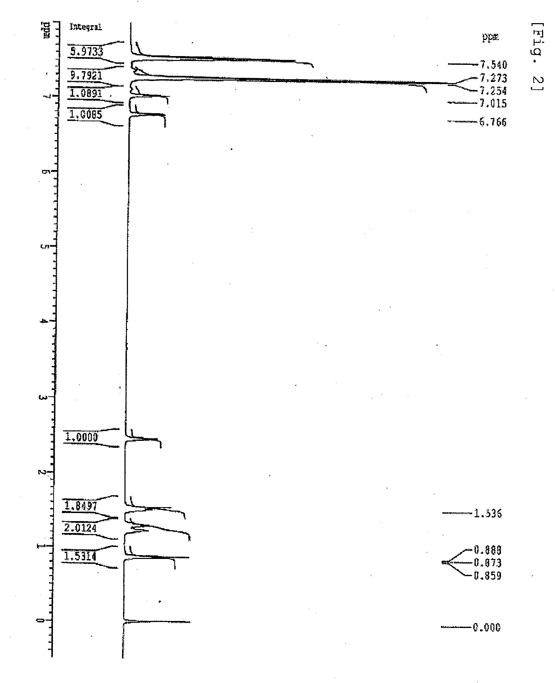

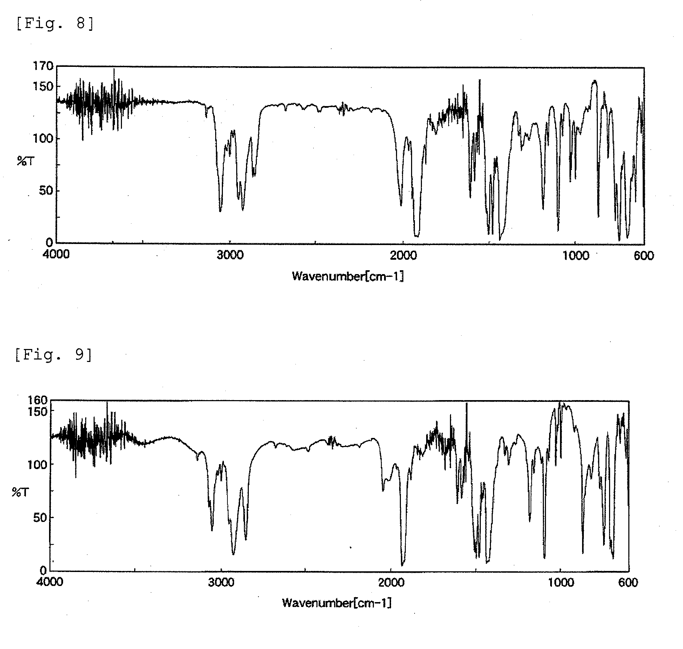

The corresponding product was obtained (13.8 g, 16.3 mmol, yield 86%) by carrying out the same reaction operations as those in Example 1 except that n-pentylbenzoic acid was used in place of benzoic acid. The results of a ¹H-NMR analysis of the product showed that the integral ratio of the region of saturated hydrocarbons at 0.8 to 2.5 ppm to the region of unsaturated hydrocarbons at 6.7 to 7.6 ppm was 11:34, which agreed well with a theoretical value. In addition, from the results of a ³¹P-NMR analysis, a singlet peak of triphenylphosphine was detected at 45.2 ppm. Further, from the measurements of IR, absorptions were observed at 2012 cm⁻¹ (Ru-H), 1913 cm⁻¹ (CO) and 1541 cm⁻¹ (metal coordinated carboxylic acid residues), and it was confirmed that the target compound RuH(OCOPh-C₅H₁₁) (CO) (PPh₃)₂ was formed. The ¹H-NMR spectrum of the ruthenium hydride complex is shown in Figure 2, its ³¹P-NMR spectrum in Figure 5 and its IR spectrum in Figure 8. Furthermore, the solubility of the ruthenium hydride complex to toluene at 20°C was 1.0 % by weight.

### [EXAMPLE 3]

### <Synthesis of RuH (OCOPh-C₈H₁₇) (CO) (PPh₃)₂>

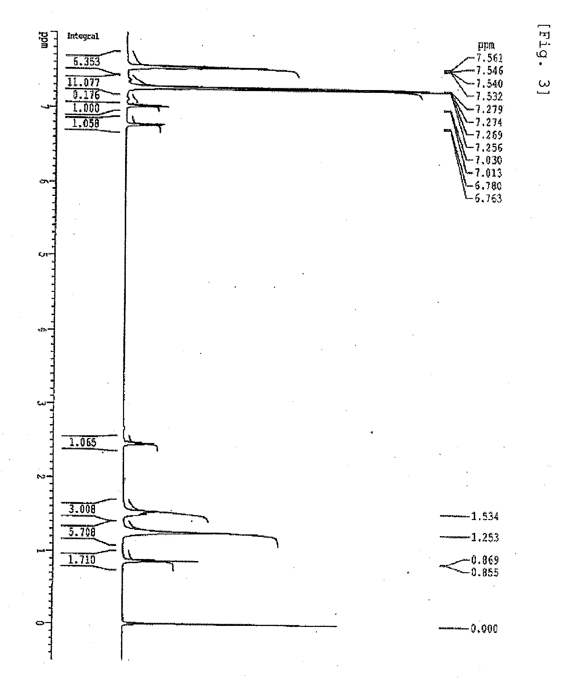

The corresponding product was obtained (13.6 g, 15.3 mmol, yield 81%) by carrying out the same reaction operations as those in Example 1 except that n-octylbenzoic acid was used in place of benzoic acid. The results of a ¹H-NMR analysis of the product showed that the integral ratio of the region of saturated hydrocarbons at 0.8 to 2.5 ppm to the region of unsaturated hydrocarbons at 6.7 to 7.6 ppm was 17:34, which agreed well with a theoretical value. In addition, from the results of a ³¹P-NMR analysis of the product, a singlet peak of triphenylphosphine was detected at 45.2 ppm. Further, from the measurements of IR, absorptions were observed at 2014 cm⁻¹ (Ru-H), 1934 cm⁻¹ (CO) and 1546 cm⁻¹ (metal coordinated carboxylic acid residues), and it was confirmed that the target compound RuH(OCOPh-C₈H₁₇) (CO) (PPh₃)₂ was formed. The ¹H-NMR spectrum of the ruthenium hydride complex is shown in Figure 3, its ³¹P-NMR spectrum in Figure 6 and its IR spectrum in Figure 9. Furthermore, the solubility of the ruthenium hydride complex to toluene at 20°C was 5.0 % by weight.

### [EXAMPLE 4]

### <Preparation of Cycloolefin Ring-opening Polymer>

Into a reaction vessel substituted with nitrogen were charged 250 parts of 8-methyl-8-methoxycarbonyltetracyclo [4.4.0.1^{2,5}.1^{7,10}]-3-dodecene, 18 parts of 1-hexene (molecular weight adjusting agent) and 750 parts of toluene and the resulting solution was heated to 80°C. Thereafter, to the solution in the reaction vessel were added 0.62 parts of a toluene solution of triethylaluminum (1.5 mol/L) as a polymerization catalyst and 3.7 parts of a toluene solution (concentration: 0.05 mol/L) of tungsten hexachloride modified with t-butanol and methanol (t-butanol: methanol: tungsten = 0.35 mol: 0.3 mol : 1 mol). The ring-opening copolymerization reaction was carried out by heating and stirring this system at 80°C for 3 hours to obtain a ring-opening metathesis polymer solution of 8-methyl-8-methoxycarbonyltetracyclo[4.4.0.1^{2,5}.1^{7,10}]-3-dodecene. The polymerization conversion rate in this polymerization reaction was 97 %.

### <Hydrogenation>

Into an autoclave was charged 1000 parts of the ring-opening polymer solution obtained above and to this solution was added as a hydrogenation catalyst a toluene solution of 0.5 % by weight of the ruthenium hydride complex obtained in Example 1 in an amount (12 parts) so that the amount of added complex was 0.06 parts. The hydrogenation reaction was carried out by heating and stirring for 3 hours under the conditions of a hydrogen gas pressure of 100 kg/cm² and a reaction temperature of 165°C. The resulting reaction solution (hydrogenated polymer solution) was cooled and then the hydrogen gas was released. This reaction solution was poured into a large amount of methanol to separate and collect a coagulated substance, which was dried to obtain a hydrogenated polymer. This polymer was analyzed by ¹H-NMR and the hydrogenation rate was determined by the ratio of the integral value of the saturated hydrocarbons at 0.6 to 2.5 ppm to the integral value of the unsaturated hydrocarbons at 5.0 to 5.6 ppm, which was 99.99 %.

### [EXAMPLE 5]

A hydrogenated polymer was obtained by hydrogenating a ring-opening metathesis polymer of 8-methyl-8-methoxycarbonyltetracyclo[4.4.0.1^{2,5}.1^{7,10}]-3-dodecene in the same way as Example 4 except that in Example 4, as a hydrogenation catalyst used for the hydrogenation reaction, a toluene solution of 1.0 % by weight of the ruthenium hydride complex obtained in Example 2 was used in an amount (6 parts) so that the amount of added complex was 0.06 parts, in place of a toluene solution of 0. 5 % by weight of the ruthenium hydride complex obtained in Example 1. The hydrogenation rate of the resulting hydrogenated polymer was determined in the same way as Example 4, which was 99.95 %.

### [EXAMPLE 6]

A hydrogenated polymer was obtained by hydrogenating a ring-opening metathesis polymer of 8-methyl-8-methoxycarbonyltetracyclo[4.4.0.1^{2,5}.1^{7,10}]-3-dodecene in the same way as Example 4 except that in Example 4, as a hydrogenation catalyst used for the hydrogenation reaction, a toluene solution of 5.0 % by weight of the ruthenium hydride complex obtained in Example 3 was used in an amount (1.2 parts) so that the amount of added complex was 0.06 part, in place of a toluene solution of 0.5 % by weight of the ruthenium hydride complex obtained in Example 1. The hydrogenation rate of the resulting hydrogenated polymer was determined in the same way as Example 4, which was 99.90 %.

### [COMPARATIVE EXAMPLE 1]

A hydrogenated polymer was obtained by hydrogenating a ring-opening metathesis polymer of 8-methyl-8-methoxycarbonyltetracyclo[4.4.0.1^{2,5}.1^{7,10}]-3-dodecene in the same way as Example 4 except that in Example 4, as a hydrogenation catalyst used for the hydrogenation reaction, a toluene solution of 0.03 % by weight of RuHCl(CO) (PPh₃)₃ which was not modified by carboxylic acid was used in an amount (200 parts) so that the amount of added complex was 0.06 parts, in place of a toluene solution of 0.5 % by weight of the ruthenium hydride complex obtained in Example 1. The hydrogenation rate of the resulting hydrogenated polymer was determined in the same way as Example 4, which was 99.75 %.

### [EXAMPLE 7]

A ring-opening polymer solution was obtained by carrying out the same polymerization operations as those in Example 4 except that 187.5 parts of 8-methyl-8-methoxycarbonyltetracyclo [4.4.0.1^{2,5}.1^{7,10}]-3-dodecene and 62.5 parts of tricyclo[4.3.0.1^{2,5}]deca-3,8-diene were used in place of 250 parts of 8-methyl-8-methoxycarbonyltetracyclo[4.4.0.1^{2,5}.1^{7,10}]-3-dodecene. The polymerization conversion rate of this polymerization reaction was 98 %.

Into an autoclave was charged 1000 parts of the ring-opening copolymer solution thus obtained and to the ring-opening copolymer solution was added a toluene solution of 1.0 % by weight of the ruthenium hydride complex obtained in Example 2 in an amount (6 parts) so that the amount of added complex was 0.06 parts. The hydrogenation reaction was carried out by heating and stirring for 3 hours under the conditions including a hydrogen gas pressure of 100 kg/cm² and a reaction temperature of 165°C. The resulting reaction solution (hydrogenated polymer solution) was cooled and then the hydrogen gas was released. This reaction solution was poured into a large amount of methanol to separate and collect a coagulated substance, which was dried to obtain a hydrogenated polymer. This polymer was analyzed by ¹H-NMR and the hydrogenation rate was determined by the ratio of the integral value of the saturated hydrocarbons at 0.6 to 2.5 ppm to the integral value of the unsaturated hydrocarbons at 5.0 to 5.6 ppm. The results showed that a high hydrogenation rate was achieved, that is, the hydrogenation rate of the unsaturated double bonds derived from the side chain of tricyclo[4.3.0.1^{2,5}] deca-3, 8-diene was 99.99 % or more and the hydrogenation rate of the main chain of the copolymer was 99.97 %.

### [EXAMPLE 8]

A ring-opening copolymer solution was obtained by carrying out the same polymerization operations as those in Example 4 except that 190 parts of 8-methyl-8-methoxycarbonyltetracyclo [4.4.0.1^{2,5}.1^{7,10}]-3-dodecene and 60 parts of spiro[fluorene-9,8'-tricyclo[4.3.0.1^{2,5}]dec-3-ene were used in place of 250 parts of 8-methyl-8-methoxycarbonyltetracyclo[4.4.0.1^{2,5}.1^{7,10}]-3-dodecene. The polymerization conversion rate in this polymerization reaction was 96 %.

Into an autoclave was charged 1000 parts of the ring-opening copolymer solution thus obtained and to the ring-opening polymer solution was added a toluene solution of 1.0 % by weight of the ruthenium hydride complex obtained in Example 2 in an amount (6 parts) so that the amount of added complex was 0.06 parts. The hydrogenation reaction was carried out by heating and stirring for 3 hours under the conditions of a hydrogen gas pressure of 100 kg/cm² and a reaction temperature of 165°C. The resulting reaction solution (hydrogenated polymer solution) was cooled and then the hydrogen gas was released. This reaction solution was poured into a large amount of methanol to separate and collect a coagulated substance, which was dried to obtain a hydrogenated polymer. This polymer was analyzed by ¹H-NMR and the hydrogenation rate was determined by the ratio of the integral value of the saturated hydrocarbons at 0.6 to 2.5 ppm to the integral value of the unsaturated hydrocarbons at 5.0 to 5. 6 ppm. The results showed that the hydrogenation rate of the main chain of the copolymer was 99.93 %. It was found out that a high hydrogenation rate was achieved by using the present catalyst as a catalyst because the hydrogenation rate was 99.30 % when the same operations were carried out by using RuHCl(CO)(PPh₃)₃.

### [EXAMPLE 9]

Into a reaction vessel substituted with nitrogen were charged 75 parts by weight of 8-methoxycarbonyl-8-methyltetracyclo[4.4.0.1^{2,5}.1^{7,10}]-3-dodecene (DNM) and 25 parts by weight of dicyclopentadiene (DCP) as monomers, 6 parts by weight of 1-butene as a molecular weight adjusting agent and 170 parts by weight of toluene, and the resultant mixture was heated to 100°C. To this mixture were added 0.005 parts by weight of triethylaluminum, 0.005 parts by weight of methanol-modified WCl₆ (anhydrous methanol : PhPOCl₂ : WCl₆ = 103 : 630 : 427 (weight ratio)), and the reaction was carried out at 100°C for one hour to obtain a polymer. The conversion was 100 %.

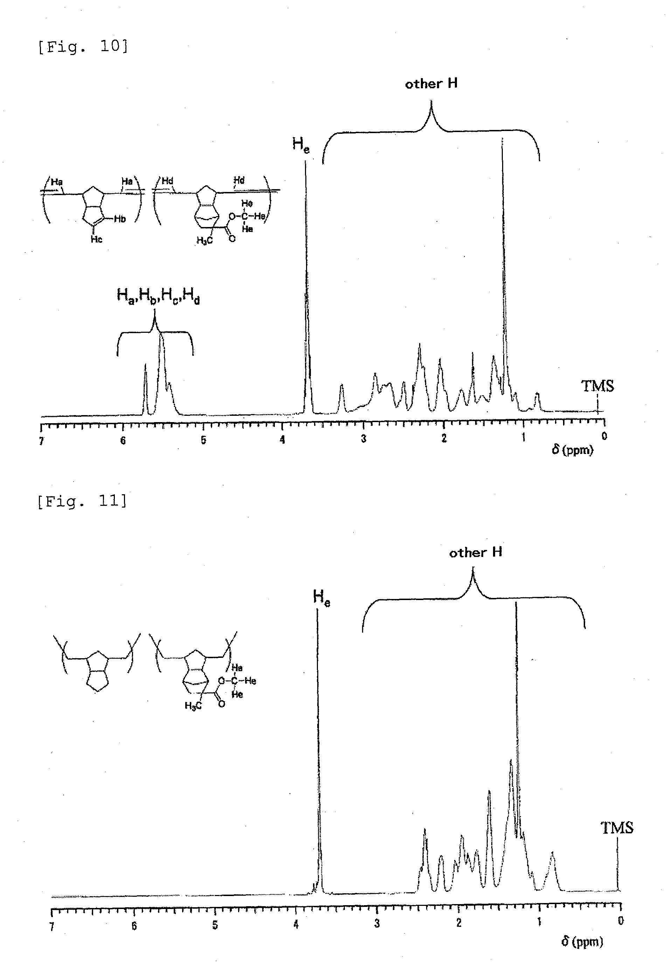

Next, into a pressure-proof autoclave with a design temperature of 185°C and a capacity of 1.25 m³ were charged a solution of the polymer obtained above equivalent to 350 kg of the solid component and as a hydrogenation catalyst 0.0335 parts by weight of RuH(CO)[P(C₆H₅)]₂(OCO-p-Ph-n-C₅H₁₃) of which saturation solubility to toluene at 25°C is 5 % by weight based on 100 parts by weight equivalent to the polymer solid component conversion, and the autoclave was heated to 100°C. Then, hydrogen gas was introduced to the autoclave to increase the pressure to 10 MPa. The maximum attained temperature during the hydrogenation reaction was 179°C. The theoretical value of generated heat was calculated from DNM = 129.3 kcal/kg and DCP = 452.3 kcal/kg. Thereafter, the reaction was carried out at 165°C for 3 hours while maintaining the pressure at 10 MPa to obtain a hydrogenated product. The resulting hydrogenated product has an intrinsic viscosity (ηᵢₙₕ) of 0.53, a weight average molecular weight (Mw) of 6.03×10⁴, a molecular weight distribution (Mw/Mn) of 2.7 and a glass transition temperature (Tg) of 146.6°C. In addition, the hydrogenation rate of the hydrogenated product was determined by ¹H-NMR measurement and 99.9 % or more of the olefinic unsaturated bonds in the main chain were hydrogenated. The ¹H-NMR measurement results before and after the hydrogenation are shown in Figures 10 and 11.

After the completion of the reaction, the hydrogenated product was diluted so that the amount of toluene was 500 parts by weight, and 3 parts by weight of distilled water, 0.72 parts by weight of lactic acid and 0.00214 parts by weight of hydrogen peroxide were added and the resulting mixture was heated at 60°C for 30 minutes. Subsequently, 200 parts by weight of methanol was added, and the resulting mixture was heated at 60°C for 30 minutes. Then, the mixture was cooled to 25°C to separate into two layers. After removing 500 parts by weight of the supernatant, 350 parts by weight of toluene and 3 parts by weight of water were added and the resulting solution was heated at 60°C for 30 minutes. Thereafter, 240 parts by weight of methanol was added to the above solution and the resultant mixture was heated at 60°C for 30 minutes. After that, the mixture was cooled to 25°C to separate into two layers. Once again, after removing 500 parts by weight of the supernatant, 350 parts by weight of toluene and 3 parts by weight of water were added and the resultant solution was heated at 60°C for 30 minutes. Then, 240 parts by weight of methanol was added and the resultant solution was heated at 60°C for 30 minutes. Subsequently, the mixture was cooled to 25°C to separate into two layers. Lastly, after removing 500 parts by weight of the supernatant, a polymer solution in the lower layer was heated to 50°C and diluted so that the solid component concentration was 20 % and the resulting polymer solution was filtered through three steps of filtration of 2.0 µm, 1.0 µm and 0.2 µm. After concentrating the filtrate to a polymer solid component of 55 % and removing the solvents at 250°C under 4 torr for a residence time of 1 hour, the resulting polymer solution was passed through a polymer filter of 10 µm to obtain a copolymer hydrogenated product (1).

In addition, the change with time of the filtration rate was followed by continuously filtering the purified solution before removing the solvents while maintaining the temperature at 50°C by heating. After 1000 hours, the filters were not clogged and the filtration rate was not decreased, resulting in the ratio, filtration rate at 1000 hr/filtration rate at 1 hr, of 1.00. It was confirmed that no gel was contained in the solution.

### [EXAMPLE 10]

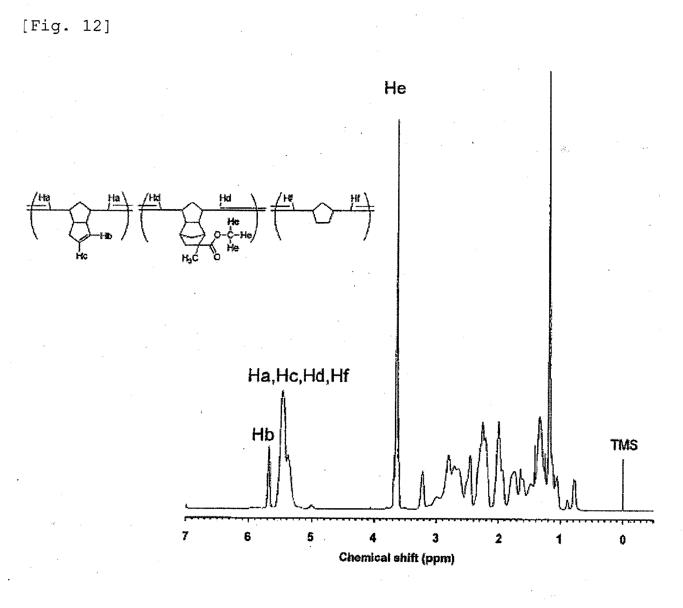

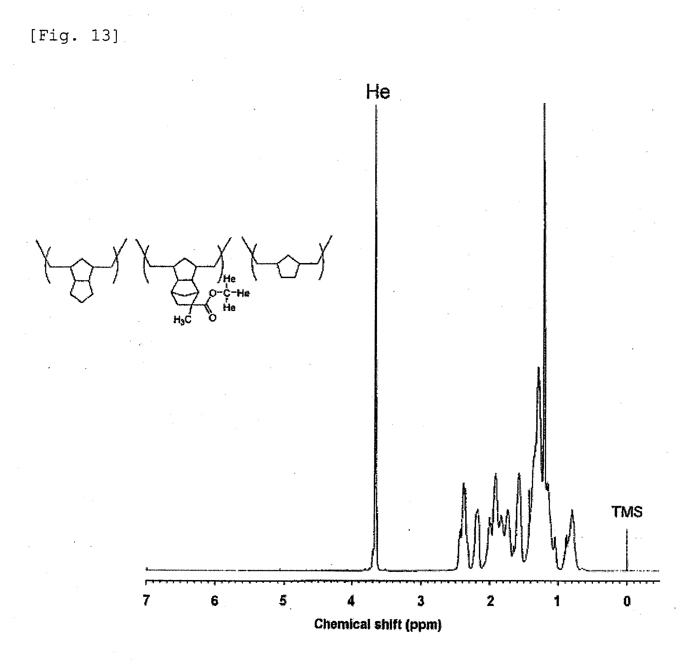

A hydrogenated product was obtained in the same way as Example 1 except that in Example 9, there were charged 65 parts by weight of 8-methoxycarbonyl-8-methyltetracyclo [4.4.0.1^{2,5}.1^{7,10}]-3-dodecene (DNM), 25 parts by weight of dicyclopentadiene (DCP) and 10 parts by weight of norbornene (NB) as monomers and 190 parts by weight of toluene to synthesize a polymer, and the charged amount equivalent to the solid component of the polymer was changed to 330 kg in the hydrogenation reaction. The resulting hydrogenated product had an intrinsic viscosity (ηᵢₙₕ) of 0. 52, a weight average molecular weight (Mw) of 6.28×10⁴, a molecular weight distribution (Mw/Mn) of 3.2 and a glass transition temperature (Tg) of 120.0°C. The maximum attained temperature during the hydrogenation reaction was 179°C. The theoretical value of generated heat was calculated from DNM = 129.3 kcal/kg, DCP = 452.3 kcal/kg and NB = 319.3 kcal/kg. The hydrogenation rate of the hydrogenated product was determined by ¹H-NMR measurement and 99.9% or more of the olefinic unsaturated bonds in the main chain were hydrogenated. The ¹H-NMR measurement results before and after the hydrogenation are shown in Figures 12 and 13.

In addition, the change with time of the filtration rate was followed by continuously filtering the purified solution before removing the solvents while maintaining the temperature at 50°C by heating. After 1000 hours, the filters were not clogged and the filtration rate was not decreased, resulting in the ratio, filtration rate at 1000 hr/filtration rate at 1 hr, of 1.00.

### [COMPARATIVE EXAMPLE 2]

A hydrogenated product was obtained in the same way as Example 1 except that in Example 9, there were used 1 part by weight of octadecyl-3-(3,5-di-t-butyl-hydroxyphenyl) propionate as a gelation inhibitor, 600 parts by weight of toluene based on 100 parts by weight of a polymer solid component and 0.0565 parts by weight of RuH(CO) [P(C₆H₅)]₃Cl of which saturation solubility to toluene is 0.05 % by weight as a hydrogenation catalyst (ruthenium metal/the amount of charged monomer = 60 ppm), the hydrogen introduction temperature was changed to 150°C and the charged amount equivalent to the solid component of the polymer was changed to 120 kg. The resulting hydrogenated product had an intrinsic viscosity (ηᵢₙₕ) of 0.53, a weight average molecular weight (Mw) of 6.03×10⁴, a molecular weight distribution (Mw/Mn) of 2.7 and a glass transition temperature (Tg) ofl46.6°C. The hydrogenation rate of the hydrogenated product was determined by ¹H-NMR measurement and 99.9 % or more of the olefinic unsaturated bonds in the main chain were hydrogenated. The maximum attained temperature during the hydrogenation reaction was 179°C, but, since the starting temperature of the hydration reaction was high, the amount of charged monomer was small and the amount of the solvent was large in order to operate at a temperature lower than the design temperature of the autoclave, productivity was poor.

In addition, the change with time of the filtration rate was followed by continuously filtering the purified solution before removing the solvent while maintaining the temperature at 50°C by heating. After 1000 hours, the filters were not clogged and the filtration rate was not decreased, resulting in the ratio, filtration rate at 1000 hr/filtration rate at 1 hr, of 1.00.

### [COMPARATIVE EXAMPLE 3]

A hydrogenated product was obtained in the same way as Example 3 except that in Example 10, there were used 1 part by weight of octadecyl-3-(3,5-di-t-butyl-4-hydroxyphenyl) propionate as a gelation inhibitor, 700 parts by weight of toluene based on 100 parts by weight of a polymer solid component and 0.0565 parts by weight of RuH (CO) [P(C₆H₅)]₃Cl of which saturation solubility to toluene at 25°C is 0.05 % by weight as a hydrogenation catalyst (ruthenium metal/the amount of charged monomer = 60 ppm), the hydrogen introduction temperature was changed to 150°C and the charged amount equivalent to the solid component of the polymer was changed to 110 kg. The resulting hydrogenated product had an intrinsic viscosity (ηᵢₙₕ) of 0.52, a weight average molecular weight (Mw) of 6.28×10⁴, a molecular weight distribution (Mw/Mn) of 3.2 and a glass transition temperature (Tg) of 120.0°C. The hydrogenation rate of the hydrogenated product was determined by ¹H-NMR measurement and 99.9 % or more of the olefinic unsaturated bonds in the main chain were hydrogenated. The maximum attained temperature during the hydrogenation reaction was 179°C, but, since the starting temperature of the hydration reaction was high, the amount of charged monomer was small and the amount of the solvent was large in order to operate at a temperature lower than the design temperature of the autoclave, productivity was poor. In addition, the change with time of the filtration rate was followed by continuously filtering the purified water before removing the solvents while maintaining the temperature at 50°C by heating. After 1000 hours, the filters were not clogged and the filtration rate was not decreased, resulting in the ratio, filtration rate at 1000 hr/filtration rate at 1 hr, of 1.00.

### [COMPARATIVE EXAMPLE 4]

A hydrogenated product was obtained in the same way as Example 1 except that in Example 9, there were used 1 part by weight of octadecyl-3-(3,5-di-t-butyl-4-hydroxyphenyl) propionate as a gelation inhibitor and 0.0565 parts by weight of RuH (CO) [P(C₆H₅)]₃Cl of which saturation solubility to toluene at 25°C is 0.05 % by weight (ruthenium metal/the amount of charged monomer = 60 ppm), and the hydrogen introduction temperature was changed to 100°C. The resulting hydrogenated product had an intrinsic viscosity (ηᵢₙₕ) of 0.53, a weight average molecular weight (Mw) of 6.03×10⁴, a molecular weight distribution (Mw/Mn) of 2.7 and a glass transition temperature (Tg) of 146.6°C. The hydrogenation rate of the hydrogenated product was determined by ¹H-NMR measurement and 99.9 % or more of the olefinic unsaturated bonds in the main chain were hydrogenated. The maximum attained temperature during the hydrogenation reaction was 179°C. In addition, the change with time of the filtration rate was followed by continuously filtering the purified solution before removing the solvents while maintaining the temperature at 50°C by heating. After 1000 hours, the filters were clogged and it became unable to perform filtration, resulting in the ratio, filtration rate at 1000 hr/filtration rate at 1 hr, of 0.

### [COMPARATIVE EXAMPLE 5]

A hydrogenated product was obtained in the same way as Example 3 except that in Example 10, there were used 1 part by weight of octadecyl-3-(3,5-di-t-butyl-hydroxyphenyl) propionate as a gelation inhibitor and 0.0565 parts by weight of RuH(CO) [P(C₆H₅)]₃Cl of which saturation solubility to toluene at 25°C is 0.05 % by weight (ruthenium metal/the amount of charged monomer = 60 ppm), and the hydrogen introduction temperature was changed to 100°C. The resulting hydrogenated product had an intrinsic viscosity (ηᵢₙₕ) of 0.52, a weight average molecular weight (Mw) of 6.28×10⁴, a molecular weight distribution (Mw/Mn) of 3.2 and a glass transition temperature (Tg) of 120.0°C. The hydrogenation rate of the hydrogenated product was determined by ¹H-NMR measurement and 99. 9 % or more of the olefinic unsaturated bonds in the main chain were hydrogenated. In addition, the change with time of the filtration rate was followed by continuously filtering the purified water before removing the solvents while maintaining the temperature at 50°C by heating. After 1000 hours, the filters were clogged and it became unable to perform filtration, resulting in the ratio, filtration rate at 1000 hr/filtration rate at 1 hr, of 0.

## Claims

1. A metal hydride complex represented by the one of the formulas
RuH(OCOPh-OC₂H₅)(CO)(PPh₃)₂,
RuH(OCOPh-NH₂)(CO)(PPh₃)₂, and
RuH(OCOPh-R)(CO)(PPh₃)₂,
wherein R represents an alkyl group having 2 to 18 carbon atoms.

2. A hydrogenation method of a cycloolefin ring-opening polymer, comprising performing a hydrogenation reaction of a cycloolefin ring-opening polymer in the presence of a metal hydride complex according to claim 1.

3. The hydrogenation method of a cycloolefin ring-opening polymer according to claim 2, wherein a toluene solubility of the metal hydride complex at 20°C is 0.2 % by weight or more.

4. The hydrogenation method of a cycloolefin ring-opening polymer according to claim 2 or 3, wherein the cycloolefin ring-opening polymer is a ring-opening (co) polymer of a monomer containing one or more kinds selected from the compounds represented by the following general formulas (I), (II) and (III): 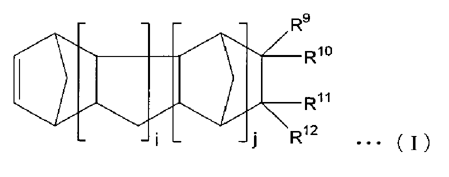 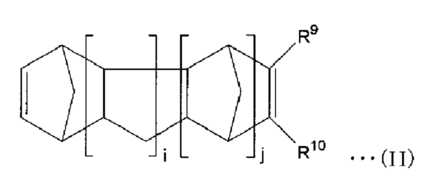 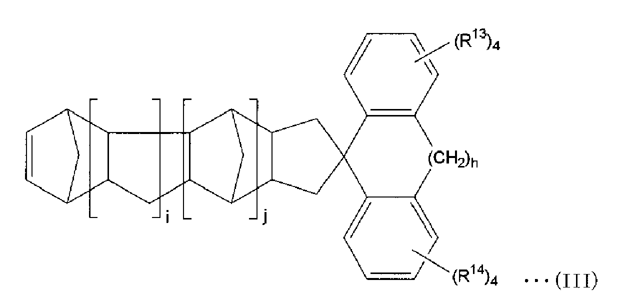 wherein, in formulas (I), (II) and (III), R⁹ to R¹⁴ each independently represent a hydrogen atom, a halogen atom, a hydrocarbon group having 1 to 30 carbon atoms or other monovalent organic group, R⁹ and R¹⁰ or R¹¹ and R¹² may together form a divalent hydrocarbon group and R⁹ or R¹⁰ and R¹¹ or R¹² may be bonded together to form a monocyclic or polycyclic structure, and h, i and j each independently are 0 or a positive integer.

5. A method for producing a hydrogenated product of a cycloolefin ring-opening polymer, comprising:
ring-opening polymerizing a monomer containing a cycloolefin compound represented by formula (II) according to claim 3;
bringing a solution of the ring-opening polymer to a temperature at 40°C or more and less than 120°C in advance; and
starting a hydrogenation reaction by contacting the solution with hydrogen in the presence of the metal hydride complex according to claim 2.

6. The method for producing a hydrogenated product of a cycloolefin ring-opening polymer according to claim 5, wherein a ring-opening copolymer obtained by copolymerizing monomers containing a compound represented by formula (II) according to claim 4 and a compound represented by formula (I) according to claim 4 is hydrogenated.

7. The method for producing a hydrogenated product of a cycloolefin ring-opening polymer according to claim 5 or 6, wherein in the hydrogenated product of a cycloolefin ring-opening polymer, when a polymer solution having a solid component concentration of 20 % by weight is continuously filtered at 50°C under a nitrogen pressure of 3.0 kgf/cm² by using three filters with an average pore size of 2.0 µm and a filtration area of 2000 cm², with an average pore size of 1.0 µm and a filtration area of 2000 cm² and with an average pore size of 0.2 µm and a filtration area of 1800 cm² that are connected serially in the order of decreasing filter pore size, a ratio of a filtration rate after one hour to a filtration rate after 1000 hours from the start of filtration is 0.85 to 1.00.

## Patentansprüche

1. Metallhydridkomplex, der durch eine der Formeln
RuH(OCOPh-OC₂H₅)(CO)(PPh₃)₂,
RuH(OCOPh-NH₂)(CO)(PPh₃)₂
und
RuH(OCOPh-R)(CO)(PPh₃)₂
dargestellt ist,
wobei R eine Alkylgruppe mit 2 bis 18 Kohlenstoffatomen darstellt.

2. Hydrierungsverfahren eines Cycloolefin-Ringöffnungspolymers, das das Durchführen einer Hydrierungsreaktion eines Cycloolefin-Ringöffnungspolymers in der Gegenwart eines Metallhydridkomplexes nach Anspruch 1 umfasst.

3. Hydrierungsverfahren eines Cycloolefin-Ringöffnungspolymers nach Anspruch 2, wobei eine Toluol-Löslichkeit des Metallhydridkomplexes bei 20°C gleich 0,2 Gew.-% oder mehr beträgt.

4. Hydrierungsverfahren eines Cycloolefin-Ringöffnungspolymers nach Anspruch 2 oder 3, wobei das Cycloolefin-Ringöffnungspolymer ein Ringöffnungs-(Co)-Polymer aus einem Monomer ist, enthaltend eine oder mehrere Arten ausgewählt aus den Verbindungen, die durch die folgenden allgemeinen Formeln (I), (II) und (III) dargestellt sind: 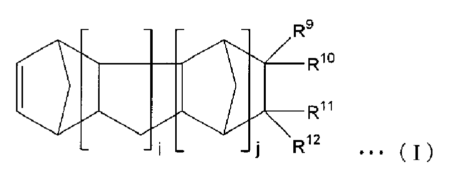 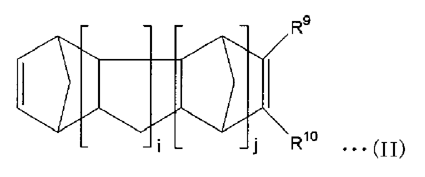 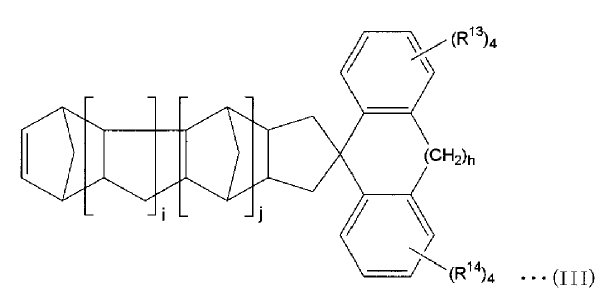 wobei in den Formeln (I), (II) und (III) R⁹ bis R¹⁴ jeweils unabhängig ein Wasserstoffatom, ein Halogenatom, eine Kohlenwasserstoffgruppe mit 1 bis 30 Kohlenstoffatomen oder eine andere monovalente organische Gruppe darstellen, R⁹ und R¹⁰ oder R¹¹ und R¹² gemeinsam eine divalente Kohlenwasserstoffgruppe bilden können und R⁹ oder R¹⁰ und R¹¹ oder R¹² aneinander gebunden sein können, um eine monozyklische oder polyzyklische Struktur zu bilden, und h, i und j jeweils unabhängig 0 oder eine positive ganze Zahl sind.

5. Verfahren zum Herstellen eines hydrierten Produkts eines Cycloolefin-Ringöffnungspolymers, umfassend:
Ringöffnungspolymerisation eines Monomers, das eine Cycloolefin-Verbindung enthält, die durch Formel (II) nach Anspruch 3 dargestellt ist;
eine Lösung des Ringöffnungspolymers im Voraus auf eine Temperatur bei 40°C oder mehr und weniger als 120°C bringen; und
Beginnen einer Hydrierungsreaktion durch in-Kontakt-bringen der Lösung mit Wasserstoff in der Gegenwart des Metallhydridkomplexes nach Anspruch 2.

6. Verfahren zum Herstellen eines hydrierten Produkts eines Cycloolefin-Ringöffnungspolymers nach Anspruch 5, wobei ein Ringöffnungscopolymer, das durch Copolymerisieren von Monomeren erhalten ist, die eine Verbindung, die durch Formel (II) nach Anspruch 4 dargestellt ist, und eine Verbindung, die durch Formel (I) nach Anspruch 4 dargestellt ist, enthalten, hydriert wird.

7. Verfahren zum Herstellen eines hydrierten Produkts eines Cycloolefin-Ringöffnungspolymers nach Anspruch 5 oder 6, wobei bei dem hydrierten Produkt eines Cycloolefin-Ringöffnungspolymers, wenn eine Polymerlösung mit einer Feststoffbestandteilkonzentration von 20 Gew.-% kontinuierlich bei 50°C unter einem Stickstoffdruck von 3,0 kgf/cm² unter Verwendung von drei Filtern mit einer durchschnittlichen Porengröße von 2,0 µm und einer Filtrationsfläche von 2000 cm², mit einer durchschnittlichen Porengröße von 1,0 µm und einer Filtrationsfläche von 2000 cm² und mit einer durchschnittlichen Porengröße von 0,2 µm und einer Filtrationsfläche von 1800 cm², die seriell in der Reihenfolge abnehmender Filterporengrößen verbunden sind, ein Verhältnis einer Filtrationsrate nach einer Stunde zu einer Filtrationsrate nach 1000 Stunden nach dem Beginn der Filtration 0,85 bis 1,00 beträgt.

## Revendications

1. Complexe d'hydrure de métal représenté par l'une des formules
RuH(OCOPh-OC₂H₅)(CO)(PPh₃)₂,
RuH(OCOPh-NH₂)(CO)(PPh₃)₂,
et
RuH(OCOPh-R)(CO)(PPh₃)₂,
dans laquelle R représente un groupe alkyle ayant 2 à 18 atomes de carbone.

2. Procédé d'hydrogénation d'un polymère d'ouverture de cycle de cyclo-oléfine, comprenant l'exécution d'une réaction d'hydrogénation d'un polymère d'ouverture de cycle de cyclo-oléfine en présence d'un complexe d'hydrure de métal selon la revendication 1.

3. Procédé d'hydrogénation d'un polymère d'ouverture de cycle de cyclo-oléfine selon la revendication 2, dans lequel une solubilité dans le toluène du complexe d'hydrure de métal à 20°C est 0,2% en poids ou plus.

4. Procédé d'hydrogénation d'un polymère d'ouverture de cycle de cyclo-oléfine selon la revendication 2 ou 3, dans lequel le polymère d'ouverture de cycle de cyclooléfine est un (co)polymère d'ouverture de cycle d'un monomère contenant une ou plusieurs espèces choisie(s) parmi les composés représentés par les formules générales (I), (II) et (III) suivantes : 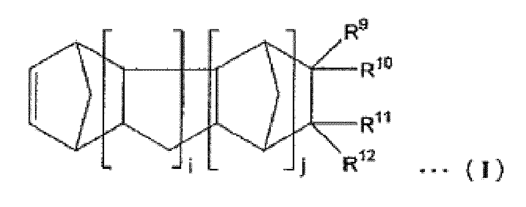 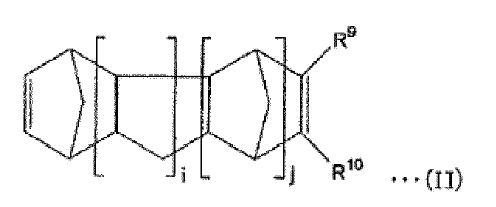 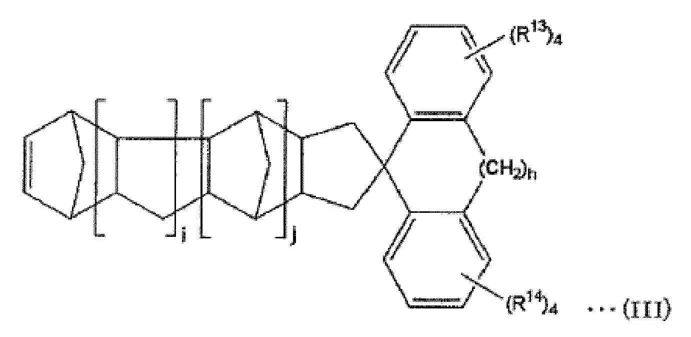 dans lequel, dans les formules (I), (II) et (III), R⁹ à R¹⁴ représentent chacun indépendamment un atome d'hydrogène, un atome d'halogène, un groupe hydrocarbure ayant 1 à 30 atomes de carbone ou autre groupe organique monovalent, R⁹ et R¹⁰ ou R¹¹ et R¹² peuvent former ensemble un groupe hydrocarbure divalent et R⁹ ou R¹⁰ et R¹¹ ou R¹² peuvent être liés ensemble pour former une structure monocyclique ou polycyclique, et h, i et j sont chacun indépendamment 0 ou un entier positif.

5. Procédé de production d'un produit hydrogéné d'un polymère d'ouverture de cycle de cyclo-oléfine, comprenant :
la polymérisation par ouverture de cycle d'un monomère contenant un composé cyclo-oléfine représenté par la formule (II) selon la revendication 3 ;
la montée d'une solution du polymère d'ouverture de cycle à une température de 40°C ou plus et de moins de 120°C au préalable ; et
le lancement d'une réaction d'hydrogénation en mettant la solution en contact de l'hydrogène en présence du complexe d'hydrure de métal selon la revendication 2.

6. Procédé de production d'un produit hydrogéné d'un polymère d'ouverture de cycle de cyclo-oléfine selon la revendication 5, dans lequel un copolymère d'ouverture de cycle obtenu par copolymérisation de monomères contenant un composé représenté par la formule (II) selon la revendication 4 et un composé représenté par la formule (I) selon la revendication 4 est hydrogéné.

7. Procédé de production d'un produit hydrogéné d'un polymère d'ouverture de cycle de cyclo-oléfine selon la revendication 5 ou 6, dans lequel, dans le produit hydrogéné d'un polymère d'ouverture de cycle de cyclooléfine, lorsqu'une solution de polymère ayant une concentration de composants solides de 20% en poids est filtrée en continu à 50°C sous une pression d'azote de 3,0 kgf/cm² en utilisant trois filtres avec une taille moyenne de pores de 2,0 µm et une superficie de filtration de 2 000 cm², avec une taille moyenne de pores de 1,0 µm et une superficie de filtration de 2 000 cm² et avec une taille moyenne de pores de 0,2 µm et une superficie de filtration de 1 800 cm² qui sont reliés en série dans l'ordre décroissant de tailles de pores de filtres, un rapport d'un taux de filtration après une heure sur un taux de filtration après 1 000 heures à compter du début de la filtration est 0,85 à 1,00.
